(19) Europäisches Patentamt
European Patent Office
Office européen des brevets

(11) EP 2 209 739 B1

(12) **EUROPÄISCHE PATENTSCHRIFT**

(45) Veröffentlichungstag und Bekanntmachung des Hinweises auf die Patenterteilung:
**04.07.2012 Patentblatt 2012/27**

(21) Anmeldenummer: **08845222.2**

(22) Anmeldetag: **28.10.2008**

(51) Int Cl.:
***C01B 33/12*** *(2006.01)* ***C01B 33/143*** *(2006.01)*
***C01B 33/18*** *(2006.01)* ***C01B 33/187*** *(2006.01)*
***C01B 33/193*** *(2006.01)*

(86) Internationale Anmeldenummer:
**PCT/EP2008/064566**

(87) Internationale Veröffentlichungsnummer:
**WO 2009/056530 (07.05.2009 Gazette 2009/19)**

(54) **FÄLLUNGSKIESELSÄUREN FÜR LAGERSTABILE RTV-1 SILICONKAUTSCHUKFORMULIERUNGEN OHNE STABILISATOR**

PRECIPITATED SILICAS FOR STORAGE-STABLE RTV-1 SILICONE RUBBER FORMULATIONS WITHOUT STABILIZER

ACIDES SILICIQUES PRÉCIPITÉS UTILISÉS POUR PRODUIRE DES FORMULATIONS DE CAOUTCHOUC DE SILICONE RTV-1 STABLES AU STOCKAGE, SANS STABILISANT

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **02.11.2007 DE 102007052269**

(43) Veröffentlichungstag der Anmeldung:
**28.07.2010 Patentblatt 2010/30**

(73) Patentinhaber: **Evonik Degussa GmbH**
**45128 Essen (DE)**

(72) Erfinder:
- **PANZ, Christian**
**50389 Wesseling-Berzdorf (DE)**
- **OBLADEN, Helga**
**50321 Brühl (DE)**
- **MEIER, Karl**
**53347 Alfter (DE)**
- **RUF, Markus**
**53347 Alfter-Witterschlick (DE)**
- **ALLERDISSE, René**
**53332 Bornheim (DE)**
- **KUHN, Dieter**
**63517 Rodenbach (DE)**
- **EL MOUSSAOUI, Aziz**
**63571 Gelnhausen-Höchst (DE)**
- **SCHOLZ, Mario**
**63584 Gründau (DE)**
- **KEMPF, Michael**
**63517 Rodenbach (DE)**

(56) Entgegenhaltungen:
**EP-A- 1 561 727** **EP-A- 1 860 067**
**DE-A1-102005 005 046**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 209 739 B1

Printed by Jouve, 75001 PARIS (FR)

**Beschreibung**

Die vorliegende Erfindung betrifft Fällungskieselsäuren welche es erlauben lagerstabile RTV-1 Siliconkautschukformulierungen ohne Stabilisator herzustellen, ein Verfahren zu deren Herstellung und deren Verwendung zur Verdickung von Dichtungsmassen.

Unter Dichtungsmassen sind elastische, in flüssiger bis zähflüssiger Form aufgebrachte Stoffe zum Abdichten von Gebäuden oder Einrichtungen gegen Wasser, atmosphärischen Einfluss oder aggressive Medien zu verstehen.

Siliconkautschuke sind in den gummielastischen Zustand überführbare Massen, welche als Grundpolymere Polydiorganosiloxane enthalten, die Vernetzungsreaktionen zugängliche Gruppen aufweisen. Als solche kommen vorwiegend H-Atome, OH-Gruppen und Vinyl-Gruppen in Frage, die sich an den Kettenenden befinden, aber auch in die Kette eingebaut sein können. In dieses System sind Füllstoffe als Verstärker eingearbeitet, deren Art und Menge das mechanische und chemische Verhalten der Vulkanisate deutlich beeinflussen. Siliconkautschuke können durch anorganische Pigmente gefärbt werden. Man unterscheidet zwischen heißvulkanisierenden und kaltvulkanisierenden Siliconkautschuken (high / room temperature vulcanizing = HTV/RTV).

Bei den kalthärtenden oder RTV-Siliconkautschuk-Massen lassen sich Einkomponentensysteme und Zweikomponentensysteme unterscheiden. Die erste Gruppe (RTV-1K) polymerisiert langsam bei Raumtemperatur unter dem Einfluss von Luftfeuchtigkeit, wobei die Vernetzung durch Kondensation von SiOH-Gruppen unter Bildung von Si, O-Bindungen erfolgt. Die SiOH-Gruppen werden durch Hydrolyse von SiX-Gruppen einer intermediär aus einem Polymer mit endständigen OH-Gruppen und einem sogenannten Vernetzer $R\text{-}SiX_3$ (z. B. X = $-O\text{-}CO\text{-}CH_3$, -NHR) entstehenden Spezies gebildet. Bei Zweikomponentenkautschuken (RTV-2K) werden als Vernetzer z. B. Gemische aus Kieselsäureestern (z.B. Ethylsilikat) und Zinn-organische Verbindungen verwendet, wobei als Vernetzungsreaktion die Bildung einer Si-O-Si-Brücke aus ≡Si-OR und ≡Si-OH (- = Methylgruppe; R = organischer Rest) durch Alkohol-Abspaltung erfolgt.

Zur Verdickung von RTV-1K-Siliconkautschuk werden u.a. Kieselsäuren eingesetzt. Diese dürfen aufgrund der Hydrolyseempfindlichkeit der Silicondichtungsmassen möglichst wenig Feuchte in das System einbringen. Daher werden bisher fast ausschließlich pyrogene Kieselsäuren für diese Anwendung eingesetzt. Hydrophile Fällungskieselsäuren konnten aufgrund ihrer hohen Feuchtegehalte bisher nicht verwendet werden.

WO 2005/061384 offenbart die Herstellung und Verwendung, u.a. in Siliconkautschuk, von Fällungskieselsäuren welche laut Anspruch eine Wasseraufnahme von < 6 % und eine DOP > 300 ml/100 g aufweisen sollen. Die in den Beispielen der WO 2005/061384 offenbarten Fällungskieselsäuren weisen jedoch allesamt eine Wasseraufnahme zwischen 5,7 und 5,9 % auf und sind somit aus den oben genannten Gründen nicht für den Einsatz in RTV-1K Formulierungen geeignet. Folgerichtig wird in der WO 2005/061384 nur die Anwendung in Siliconkautschukformulierungen für Extrusionsverfahren (HTV)beschrieben.

In der EP 1557446 werden ausschließlich HTV-Siliconkautschukformulierungen beschrieben. Die dort eingesetzten Fällungskieselsäuren weisen einen Trocknungsverlust von < 4% auf. Die in der EP 1557446 offenbarten Formulierungen werden zur Herstellung von Isoliermaterialien wie z. B. Kabelummantelungen verwendet.

Aus DE 102005005046 sind Fällungskieselsäuren bekannt, die eine Silanolgruppendichte von kleiner als 2,5 $SiOH/nm^2$ aufweisen und an der Oberfläche silyliert sind.

Ferner sind aus EP 1561727 alkalische Fällungskieselsäuren mit einem pH-Wert >8 bekannt.

Zusammenfassend lässt sich somit feststellen, dass im zuvor genannten Stand der Technik keine Fällungskieselsäuren offenbart werden, welche die hohen Anforderungen für den Einsatz in RTV-1K-Silikonkautschuk erfüllen. Daher besteht ein starker Bedarf nach solchen, für RTV-1K-Anwendungen geeigneten, Fällungskieselsäuren.

Zur Lösung des zuvor genannten Problems wurden in der DE 102006024591 und der DE102006024590 Fällungskieselsäuren vorgeschlagen welche für RTV-1K-Silikonkautschukformulierungen geeignet sind. Nachteilig an den dort offenbarten Fällungskieselsäuren ist jedoch, dass zur Erzielung einer guten Lagerstabilität der RTV-1K-Formulierungen ein Stabilisator und relativ große Mengen an Vernetzer zugegeben werden müssen.

Ausgehend von dem zuvor beschriebenen Stand der Technik bestand die Aufgabe der vorliegenden Erfindung darin, Fällungskieselsäuren bereit zu stellen, bei denen die zuvor geschilderten Nachteile der Fällungskieselsäuren des Standes der Technik ganz oder zumindest teilweise beseitigt wurden. Ferner soll ein Verfahren zur Herstellung der erfindungsgemäßen Fällungskieselsäuren zur Verfügung gestellt werden.

Weitere nicht explizit genannte Aufgaben ergeben sich aus dem Gesamtzusammenhang der Beschreibung, Beispiele und Ansprüche.

Überraschenderweise wurde gefunden, dass diese Aufgabe durch die in der nachfolgenden Beschreibung sowie in den Ansprüchen und den Beispielen näher definierten erfindungsgemäßen Fällungskieselsäuren gelöst wird.

Gegenstand der vorliegenden Erfindung, sind daher Fällungskieselsäuren, welche ein Extinktionsverhältnis $SiOH_{isoliert}$ von größer gleich 1,5, eine Silanolgruppendichte von 1 bis 3,0 $SiOH/nm^2$ und eine modifizierte Stampfdichte von 1 bis 50 g/l aufweisen, und dadurch gekennzeichnet sind, dass der pH-Wert der Fällungskieselsäure im Bereich von 3 - 5 liegt, ausgenommen Fällungskieselsäure mit einem pH-Wert von 4-5.

Gegenstand der Erfindung sind auch Fällungskieselsäuren, bevorzugt hydrophile Fällungskieselsäuren, die

neben den zuvor genannten Parametern, unabhängig voneinander, einen oder mehrere der folgenden physikalisch-chemischen Parameter aufweisen:

- BET-Oberfläche 50 - 600 $m^2$/g
- CTAB-Oberfläche 50 - 350 $m^2$/g
- DBP (wasserfrei) 150 - 400 g/100g
- Glühverlust 0,1 - 3,0 Gew.-%
- Trocknungsverlust 0,1 - 3,0 Gew.-%
- Anteil an Partikeln < 1 µm in der volumenbezogene Partikelverteilung 5 bis 100 %
- $d_{90}$-Wert der volumenbezogenen Partikelverteilung 0,001 bis 10 µm

Ein weiterer Gegenstand der vorliegenden Erfindung ist ein Verfahren zur Herstellung der erfindungsgemäßen Fällungskieselsäuren wie in den Ansprüchen und der nachfolgenden Beschreibung definiert.

Ein weiterer Gegenstand der vorliegenden Erfindung ist die Verwendung der erfindungsgemäßen Fällungskieselsäuren in Dichtungsmassen, insbesondere in Siliconkautschuk bzw. Silicondichtungsmassen und besonders bevorzugt in RTV-1K-Dichtungsmassen. Die Anwendung ist möglich in verschiedenen Vernetzungssystemen, z. B. acetoxyvernetzend, alcoxy-vernetzend und oxim-vernetzend. Diese Systeme finden Anwendung z.B. in der Bauindustrie als Fugendichtungsmassen, in der Automobilindustrie als Kleb- und Dichtstoff und als Beschichtungsmassen für z.B. Textilgewebe.

Ein weiterer Gegenstand der vorliegenden Erfindung sind Dichtungsmassen auf Basis von Siliconkautschuk, die die erfindungsgemäßen Fällungskieselsäuren enthalten, und deren Verwendung.

Die erfindungsgemäßen Fällungskieselsäuren haben auf Grund Ihrer speziellen Struktur und Oberflächenbeschaffenheit den Vorteil, das sie nach Einarbeitung in Siliconkautschukmassen, speziell des Typs RTV-1K, eine hohe Lagerstabilität, eine hohe Standfestigkeit und einen optimalen Fließpunkt des Siliconkautschuks gewährleisten ohne dass die Siliconkautschukformulierungen einen Stabilisator enthalten.

Die Erfinder haben überraschend herausgefunden, dass Fällungskieselsäuren mit einem Extinktionsverhältnis $SiOH_{isoliert}$ von größer gleich 1,5, einer Silanolgruppendichte 1 bis 3,0 SiOH/$nm^2$ und einer modifizierte Stampfdichte von 1 bis 50 g/l, wenn sie einen pH-Wert im Bereich von 3 - 5, ausgenommen Fällungskieselsäure mit einem pH-Wert von 4-5 aufweisen, eine gute Lagerstabilität von Siliconkautschukformulierungen ohne Zugabe eines Stabilisators ermöglichen.

Weiterhin haben die erfindungsgemäßen Fällungskieselsäuren den Vorteil, dass durch die spezielle Kombination der in Anspruch 1 beanspruchten Parameter, die benötigte Menge an Vernetzer in RTV-1K-Silikonkautschukformulierungen deutlich reduziert werden kann, was zu einem nennenswerten ökonomischen Vorteil führt.

Trotz des Verzichts auf einen Stabilisator und die Reduktion der Menge an Vernetzer weisen RTV-1K-Formulierungen enthaltend die erfindungsgemäßen Fällungskiesesläuren eine hohe Thixothropie auf. Ferner können die erfindungsgemäßen Fällungskieselsäuren gut und schnell in Silikonkautschukformulierungen eindispergiert und damit eine hohe Verdickungswirkung in RTV-1K-Siliconkautschukmassen erzielt werden.

Darüber hinaus bieten die erfindungsgemäßen Fällungskieselsäuren gegenüber den bisher in RTV1-Siliconkautschuk eingesetzten pyrogenen Kieselsäuren einen wesentlichen Kostenvorteil, da sie kostengünstiger hergestellt werden können.

Die Gegenstände der Erfindung werden nachfolgend im Detail beschrieben.

In der vorliegenden Erfindung werden die Begriffe Kieselsäure und Fällungskieselsäure synonym verwendet. Unter **hydrophilen** Fällungskieselsäuren sind dabei solche zu verstehen, deren Oberfläche sich beim Einrühren in Wasser hydrophil verhält, d.h. deren Oberfläche von Wasser vollständig benetzt wird und somit gegenüber Wasser einen Kontaktwinkel der kleiner als 90° ist aufweisen. Die erfindungsgemäßen hydrophilen Fällungskieselsäuren haben bevorzugt einen Kohlenstoffgehalt von < 0,5 Gew.-%.

Die erfindungsgemäßen Fällungskieselsäuren zeichnen sich dadurch aus, das sie einen besonders großen Anteil an isolierten SiOH-Gruppen, ausgedrückt durch das **Extinktionsverhältnis $SiOH_{isoliert}$**, auf ihrer Oberfläche aufweisen. Das Extinktionsverhältnis $SiOH_{isoliert}$ der erfindungsgemäßen Fällungskieselsäuren ist größer gleich 1,5

bevorzugt zwischen 1,5 und 10, besonders bevorzugt zwischen 1,5 und 7, ganz besonders bevorzugt zwischen 1,8 und 5, speziell bevorzugt zwischen 2 und 4,5, ganz speziell bevorzugt zwischen 2,3 und 4,0 und insbesondere bevorzugt zwischen 2,3 und 3,5. Diese besondere Oberflächenbeschaffenheit der erfindungsgemäßen Fällungskieselsäuren ist eine wesentliche Eigenschaft, die dazu führt, dass die Fällungskieselsäuren in Siliconkautschukformulierungen zu einer hohen Lagerstabilität, zu einer verbesserten Standfestigkeit und zu einem optimierten Fließverhalten führt.

Die erfindungsgemäßen Fällungskieselsäuren zeichnen sich zudem durch eine niedrige **Silanolgruppendichte,** d. h. einen weiten Abstand der Silanolgruppen auf der Fällungskieselsäureoberfläche aus. Zur Bestimmung der Silanolgruppendichte wird zunächst mittels $LiAlH_4$ die Anzahl der Silanolgruppen auf der Oberfläche der Fällungskieselsäure ermittelt. Diese allein ist jedoch nicht aussagekräftig, da Fällungskieselsäuren mit hoher Oberfläche in der Regel eine höhere absolute Anzahl an Silanolgruppen aufweisen als Fällungskieselsäuren mit einer niedrigen Oberfläche. Daher ist die Silanolgruppenanzahl auf die Oberfläche der Fällungskieselsäure zu beziehen. Als geeignete Oberfläche bietet sich hierfür die BET-Oberfläche an, da diese die Oberfläche beschreibt, die auch kleineren Molekülen wie z. B. Wasser zugänglich ist. Die Silanolgruppendichte der erfindungsgemäßen Fällungskieselsäuren liegt bevorzugt im Bereich von 1,0 bis 3,0 $SiOH/nm^2$, bevorzugt von 1,0 bis 2,8 $SiOH/nm^2$, besonders bevorzugt von 1,5 bis 2,8 $SiOH/nm^2$. Ist die Anzahl an Silanolgruppen pro $nm^2$ zu niedrig, so kann dies eine zu niedrige Fließgrenze bewirken und sich dadurch negativ auf die Standfestigkeit der Silicondichtungsmassen auswirken.

Die erfindungsgemäßen Fällungskieselsäuren weisen zudem eine niedrige modifizierte Stampfdichte auf. Hierbei ist zu beachten, dass mit der modifizierten Stampfdichte die Stampfdichte gemessen am unverdichteten Material gemeint ist. Um diese Größe auch an bereits durch Verpackung und Lagerung vorverdichtetem Materialien bestimmen zu können, ist eine Probenpräparation, wie sie im Abschnitt "Bestimmung der **modifizierten Stampfdichte"** beschrieben ist, durchzuführen. Die erfindungsgemäßen Fällungskieselsäuren weisen bevorzugt eine modifizierte Stampfdichte von 1 bis 50 g/l, besonders bevorzugt von 5 bis 55 g/l, ganz besonders bevorzugt von 10 bis 50 g/l und insbesondere bevorzugt von 10 bis 30 g/l auf.

Schließlich zeichnen sich die erfindungsgemäßen Fällungskieselsäuren durch einen pH-Wert im Bereich von 3 - 5, ausgenommen Fällungskieselsäure mit einem pH-Wert von 4-5, aus. Der niedrige pH-Wert erlaubt es bei der Formulierung der Siliconkautschukformulierungen auf den Stabilisator zu verzichten und somit auch ohne Stabilisator eine gute Lagerstabilität zu erreichen.

Ohne an eine spezielle Theorie gebunden zu sein können die speziellen Eigenschaften der erfindungsgemäßen Fällungskieselsäuren, d.h. dass sie es erlauben lagerstabile Siliconkautschukformulierungen mit hervorragenden anwendungstechnischen Eigenschaften, wie z. B. guter Standfestigkeit und Rheologie, ohne Stabilisatorzusatz herzustellen, durch die hohe Anzahl der isolierten SiOH-Gruppen der Fällungskieselsäuren in Kombination mit deren großen Abstand, der niedrigen midifizierten Stampfdichte und vor allem dem niedrigen pH-Wert erklärt werden. Ferner kann durch diese spezielle Kombination von physikalisch chemischen Eigenschaften der erfindungsgemäßen Fällungskieselsäuren erreicht werden, dass bei Verwendung der erfindungsgemäßen Kieselsäuren als Füllstoff in Silikonkautschukformulierungen nur geringe Mengen an Vernetzer für die Formulierung notwendig sind.

Die spezifische **BET-Oberfläche** beschreibt den Einfluss der Fällungskieselsäure auf das Einarbeitungsverhalten in den Siliconkautschuk sowie die Rohmischungseigenschaften (vgl. S. Brunauer, P. H. Emmett, E. Teller, "Adsorption of Gases in Multimolecular Layers", J. Am. Chem. Soc. 60, 309 (1938)). So können die erfindungsgemäßen Fällungskieselsäuren eine BET-Oberfläche 50 bis 600 $m^2/g$, bevorzugt 50 bis 400 $m^2/g$, besonders bevorzugt 50 bis 250 $m^2/g$, ganz besonders bevorzugt von 80 bis 230 $m^2/g$, speziell bevorzugt von 100 bis 180 $m^2/g$, ganz speziell bevorzugt von 125 bis 180 $m^2/g$ und insbesondere bevorzugt von 140 bis 170 $m^2/g$ aufweisen.

Die spezifische **CTAB-Oberfläche** ist vorwiegend für die Verstärkungseigenschaft der Fällungskieselsäure von entscheidender Bedeutung (vgl. Janzen, Kraus, Rubber Chem. Technol. 44, 1287 (1971)). Das Verstärkungspotential steigt mit zunehmender CTAB-Oberfläche. So können die erfindungsgemäßen Fällungskieselsäuren eine CTAB-Oberfläche von 50 bis 350 $m^2/g$, besonders bevorzugt 50 bis 250 $m^2/g$, ganz besonders bevorzugt von 80 bis 230 $m^2/g$, speziell von 100 bis 200 $m^2/g$, ganz speziell bevorzugt von 125 bis 190 $m^2/g$ aufweisen.

Es hat sich weiterhin herausgestellt, das eine hohe **DBP-Aufnahme** der erfindungsgemäßen Fällungskieselsäuren von Nutzen ist, um gute rheologische Eigenschaften bei den Siliconkautschukformulierungen zu erzielen. Zu hohe DBP-Werte können allerdings zu einer übermäßigen Viskositätserhöhung des Siliconkautschuks führen und sollten daher vermieden werden. Die erfindungsgemäßen Fällungskieselsäuren weisen daher bevorzugt eine DBP-Aufnahme von 150 bis 400 g/(100g), besonders bevorzugt 200 bis 350 g/(100 g), ganz besonders bevorzugt von 220 bis 330 g/(100 g), speziell bevorzugt 250 bis 330 g/(100 g) und ganz speziell bevorzugt 260 bis 320 g/(100 g) auf.

Die Erfinder haben zudem festgestellt, das es für die Standfestigkeit der Silicondichtungsmassen von besonderem Vorteil sein kann, wenn die erfindungsgemäßen Fällungskieselsäuren einen ausreichenden Anteil an feinen Partikeln, d. h. an Partikeln $< 1\ \mu m$, aufweisen. Dies trifft auf alle zuvor beschriebenen Ausführungsformen zu. Daher weisen die erfindungsgemäßen Fällungskieselsäuren im Partikelgrößenbereich $< 1\ \mu m$ der **volumenbezogenen Partikelverteilung** bevorzugt einen Anteil an feinen Partikeln von 30 bis 100 %, bevorzugt 30 bis 95%, besonders bevorzugt 35 bis 95 %, ganz besonders bevorzugt 35 bis 90 %, speziell bevorzugt 40 bis 90%, speziell bevorzugt 45 bis 80% und

insbesondere bevorzugt von 50 bis 80 % auf.

Auch wurde festgestellt, dass ein zu hoher Anteil an groben Partikeln die anwendungstechnischen Eigenschaften der erfindungsgemäßen Fällungskieselsäuren negativ beeinflussen kann. Daher zeichnen sich die erfindungsgemäßen Fällungskieselsäuren bevorzugt dadurch aus, das bezogen auf die volumenbezogene Partikelverteilungskurve, der $d_{90}$ -Wert zwischen 0,001 und 10 µm, bevorzugt zwischen 1 und 10 µm, besonders bevorzugt zwischen 2 und 8 µm und insbesondere bevorzugt zwischen 3 und 7 µm ist.

Die Partikelverteilungen können monomodal oder bimodal, vorzugsweise bimodal sein.

Es wurde auch festgestellt, das es für alle zuvor beschriebenen Ausführungsformen der erfindungsgemäßen Fällungskieselsäuren besonders vorteilhaft sein kann, wenn die Fällungskieselsäure von vornherein möglichst wenig Feuchtigkeit mit in die Silikondichtungsmasse einbringt. Die erfindungsgemäßen Fällungskieselsäuren können daher eine Anfangsfeuchte, ausgedrückt durch den **Trocknungsverlust,** von 0,1 bis 3,0 Gew. %, bevorzugt 0,2 bis 2,5 Gew.-%, besonders bevorzugt 0,3 bis 2,0 Gew.-% und insbesondere bevorzugt 0,4 bis 1,8 Gew.-% und/oder einen **Glühverlust** von 0,1 - 3,0 Gew. %, bevorzugt 0,2 bis 3,0 Gew.-%, besonders bevorzugt 0,3 bis 2,0 Gew.-% und insbesondere bevorzugt 0,4 bis 1,8 Gew.-% aufweisen.

Die genannten Vorzugsbereiche können unabhängig voneinander eingestellt werden.

Die erfindungsgemäßen Fällungskieselsäuren können nach einem Verfahren hergestellt werden, das die nachfolgend beschriebenen Schritte

1. Umsetzung von zumindest einem Silikat mit zumindest einem Säuerungsmittel

2. Filtration und Waschen der erhaltenen Fällungskieselsäure

3. Trocknung der erhaltenen Fällungskieselsäure bzw. des Filterkuchens

4. Optional Vermahlung der nach Schritt 3 erhaltenen Fällungskieselsäure

5. Temperung der getrockneten und/oder vermahlenen Fällungskieselsäure

6. Optional Vermahlung der nach Schritt 5 erhaltenen Fällungskieselsäure

umfasst und das dadurch gekennzeichnet ist, dass nach Schritt 3 und/oder 4 und/oder Schritt 5 und/oder Schritt 6 zumindest ein Säuerungsmittel derart zugegeben wird, dass die am Ende des Verfahrens erhaltene Fällungskieselsäure einen pH-Wert von 3 - 5, ausgenommen Fällungskieselsäure mit einem pH-Wert von 4-5, aufweist.

Schritt 1 umfasst dabei bevorzugt die Teilschritte

1a Herstellung einer Vorlage aus Wasser bzw. Wasser und zumindest einem Silikat und/oder einer Silikatlösung, wobei der pH-Wert der so erhaltenen Vorlage bevorzugt zwischen pH 5 und pH 10 und die Temperatur der Vorlage bevorzugt zwischen 80 und 100 °C liegt.

1b Dosierung zumindest eines Silikats und/oder einer Silikatlösung und zumindest eines Säuerungsmittels unter Rühren bei 80 bis 100 °C in die Vorlage aus Teilschritt 1a), so lange, bis ein Feststoffgehalt der Fällsuspension erreicht ist, der zu dem in Teilschritt 1c) zu erreichenden Feststoffgehalt führt. Dabei erfolgt die Zugabe von Silikat und/oder Silikatlösung und Säuerungsmittel besonders bevorzugt gleichzeitig und/oder so, das der pH-Wert für die Dauer von Teilschritt 1b) konstant auf einem Wert zwischen pH 7 und pH 10 gehalten wird

1c Zugabe eines Säuerungsmittels bei einer Temperatur der Fällsuspension von 80 bis 100 °C, so das der pH-Wert der Fällsuspension auf 2 bis 6 erniedrigt wird und der Feststoffgehalt der Fällsuspension am Ende dieses Teilschritts zwischen 30 und 70 g/l liegt.

Bevorzugt werden die erfindungsgemäßen Fällungskieselsäuren vermahlen. Dies erfolgt besonders bevorzugt so, das die erfindungsgemäßen Fällungskieselsäuren in einem Schritt 4, d. h. zwischen den Schritten 3 und 5 oder in einem Schritt 6, d. h. nach Schritt 5, oder sowohl in Schritt 4, d. h. zwischen Schritt 3 und 5, als auch in Schritt 6, d. h. nach Schritt 5, vermahlen werden.

Alle bekannten Silikatformen kommen für die in Schritt 1) des erfindungsgemäßen Verfahrens eingesetzten Silikate bzw. Silikatlösungen in Frage. Bevorzugt handelt es sich bei den erfindungsgemäß eingesetzten Silikaten um alkalische Silikate, z. B. Natrium- oder Kaliumsilikate. Besonders bevorzugt handelt es sich in Schritt 1 um Natriumsilikat (Wasserglas). Dessen Gewichtsverhältnis von $SiO_2$ zu $Na_2O$ liegt zwischen 2 und 4, bevorzugt zwischen 3 und 3,6 und besonders bevorzugt zwischen 3,3 und 3,5. Der Gehalt an $SiO_2$ liegt bevorzugt zwischen 20 und 40 Gew.-%, bevorzugt zwischen 25 und 30 Gew.-%.

Unter Säuerungsmittel sind saure Verbindungen organischer oder anorganischer Natur zu verstehen, mit deren

Hilfe der pH-Wert der Fällsuspension erniedrigt werden kann. Bevorzugt können anorganische Säuren wie Salzsäure, Phosphorsäure, Schwefelsäure oder Salpetersäure oder organische Säuren wie Essigsäure, Ameisensäure oder Kohlensäure bzw. Kohlendioxid eingesetzt werden. Es können sowohl verdünnte als auch konzentrierte Säuren verwendet werden. Besonders bevorzugt wird in dem erfindungsgemäßen Verfahren Schwefelsäure eingesetzt.

Zumeist sind das eingesetzte Silikat und/oder die Silikatlösung sowie Säuerungsmittel in den Teilschritten 1a) bis 1c) identisch.

Der pH-Wert der Vorlage in Teilschritt 1a) liegt bevorzugt zwischen pH 7 und pH 10, besonders bevorzugt zwischen pH 8 und pH 9. Die Temperatur der Vorlage wird auf 80 bis 100 °C, bevorzugt auf 85 bis 95 °C eingestellt.

Im Teilschritt 1b) werden Silikat und Säuerungsmittel bevorzugt gleichzeitig zudosiert. Die Zugabe der beiden Komponenten erfolgt bevorzugt kontinuierlich gleichbleibend über die gesamte Dauer von Teilschritt 1b). Die Temperatur bleibt während dessen bei 80 bis 100 °C, bevorzugt auf 85 bis 95 °. Die Dauer der Zugabe erfolgt so lange, bis der am Ende von Schritt 1c) zu erreichende Feststoffgehalt erreicht ist. Es kann dabei notwendig sein, dass die Fällung über den Viskositätsanstiegspunkt hinaus fortgesetzt wird. Dieser Viskositätsanstiegspunkt entspricht dabei dem Zeitpunkt, bei dem ein starkes Ansteigen der Viskosität der Fällsuspension im Fällverlauf, vgl. dazu EP 0643015, zu beobachten ist. Während des Teilschritts 1b), in dem das Ausfällen der Kieselsäure beginnt, wird der pH-Wert möglichst konstant bei einem pH-Wert zwischen pH 7 und pH 10, bevorzugt konstant bei einem pH-Wert zwischen pH 7,5 und 9,5 und ganz besonders bevorzugt bei einem pH-Wert zwischen pH 8 und 9, gehalten. Korrekturen eines abweichenden pH-Wertes erfolgen in der Regel über ein Erhöhen oder Erniedrigen der Zugabe des Säuerungsmittels, so das eingestellte pH-Wert vorzugsweise nur um ± 0,2 pH-Einheiten, besonders bevorzugt nur um ± 0,1 pH-Einheiten schwankt.

Durch Zugabe eines Säuerungsmittels bei einer Temperatur der Fällsuspension von 80 bis 100 °C wird in Teilschritt 1c) deren pH-Wert auf 2 bis 6, bevorzugt auf pH 3 bis 6, besonders bevorzugt auf pH 3 bis pH 4, erniedrigt. Der Feststoffgehalt der Fällsuspension am Ende dieses Teilschritts liegt zwischen 30 und 70 g/l, bevorzugt zwischen 45 und 60 g/l und ganz besonders bevorzugt zwischen 45 und 55 g/l.

Ohne in irgendeiner Weise an eine besondere Theorie gebunden zu sein, soll im Teilschritt 1b) durch die geeignete Wahl der Prozessparameter eine kettenförmige Struktur der Aggregate aufgebaut werden. Durch das entsprechend langsame weitere Auffällen auch nach dem Viskositätsanstiegspunkt wird eine Verstärkung dieser bis dahin recht losen Aggregatstruktur erreicht.

Die Dosiergeschwindigkeiten in Schritt 1b) sind in allen Ausführungsformen des erfindungsgemäßen Verfahrens sowohl vor als auch nach dem Viskositätsanstiegspunkt so zu wählen, das der zu erzielende Feststoffgehalt nach Ansäuerung im Schritt 1c) von 30 bis 70 g/l erreicht wird.

Die Filtration, Verflüssigung (z. B. gemäß DE 2447613) und Lang- oder Kurzzeittrocknung der erfindungsgemäßen Fällungskieselsäuren sind dem Fachmann geläufig und können z. B. in den in der Beschreibung genannten Dokumenten nachgelesen werden. Die Filtration und das Waschen der Fällungskieselsäure erfolgt bevorzugt in der Art und Weise, das die Leitfähigkeit des Endprodukts < 1000 μS/cm, bevorzugt < 500 μS/cm und besonders bevorzugt < 200 μS/cm beträgt.

Bevorzugt wird die erfindungsgemäße Fällungskieselsäure in einem Stromtrockner, Sprühtrockner, Etagentrockner, Bandtrockner, Drehrohrtrockner, Flash-Trockner, Spin-Flash-Trockner oder Düsenturmtrockner getrocknet. Diese Trocknungsvarianten schließen den Betrieb mit einem Atomizer, einer Ein- oder Zweistoffdüse oder einem integrierten Fließbett ein. Die Sprühtrocknung kann z. B. gemäß US 4094771 durchgeführt werden.

Wird als Trocknungsart die Sprühtrocknung gewählt, was besonders bevorzugt ist, so ist der Filterkuchen zuvor zu redispergieren. Die Redispergierung erfolgt vorzugsweise in Wasser bzw. wässriger Säure so, dass die Dispersion einen pH-Wert von 4 bis 7 aufweist Dabei ist darauf zu achten, dass die Fällungskieselsäuredispersion nach beendeter Redispergierung einen Feststoffgehalt von 5 bis 18, bevorzugt 8 bis 13 Gew.-%, besonders bevorzugt 9 bis 11% aufweist und dass bei der Redispergierung keine zu starken Scherkräften auf die Fällungskieselsäure einwirken. Dies kann z. B. durch Umrühren mit einer Drehzahl von < 1000 U/min erreicht werden, wobei bevorzugt raumübergreifend und nicht punktuell gerührt wird. Bevorzugt wird die redispergierte Fällungskieselsäuredispersion so in den Sprühtrockner dosiert, dass sich am Trockneraustritt eine Temperatur von 100 bis 170 °C, bevorzugt 130 - 160 °C einstellt.

Die Vermahlung der erfindungsgemäßen Fällungskieselsäuren kann z. B. wie in *Ullmann, 5. Auflage, B2, 5-20* beschrieben durchgeführt werden. Bevorzugt erfolgt die Vermahlung der erfindungsgemäßen Fällungskieselsäuren in Schritt 4 und/oder in Schritt 6, ganz besonders bevorzugt in Schritt 4. Dazu wird insbesondere bevorzugt ein Mahlsystem (Mahlapparatur) umfassend oder bestehend aus Prallmühlen oder Strahlmühlen, bevorzugt Gegenstrahlmühlen eingesetzt. Besonders bevorzugt werden Fließbettgegenstrahlmühlen verwendet. Ganz besonders bevorzugt erfolgt die Vermahlung mittels eines Mahlsystems (Mahlapparatur), insbesondere bevorzugt eines Mahlsystems umfassend eine Strahlmühle, welches dadurch gekennzeichnet ist, dass die Mühle des Mahlsystems in der Mahlphase mit einem Betriebsmittel, ausgewählt aus der Gruppe, die aus Gas und/oder Dampf, bevorzugt Wasserdampf, und/oder einem Gas enthaltend Wasserdampf, besteht, betrieben wird und dass der Mahlraum in einer Aufheizphase, d. h. vor dem eigentlichen Betrieb mit dem Betriebsmittel, derart aufgeheizt wird, dass die Temperatur im Mahlraum und/oder am Mühlenausgang, höher liegt als der Taupunkt des Dampfes und/oder Betriebsmittel.

Insbesondere bevorzugt erfolgt die Vermahlung nach dem in der DE 10 2006 048 850.4 beschriebenen Verfahren, mit dem dort beschriebenen Mahlsystem (Mühle), wobei speziell bevorzugt Wasserdampf als Betriebsmittel verwendet wird. Zur Vermeidung von reinen Textwiederholungen wird der Inhalt der zitierten Patentschrift hiermit explizit in den Inhalt der vorliegenden Anmeldung einbezogen. Die Mahlparameter werden bevorzugt so gewählt, dass das vermahlene Produkt im Bereich kleiner 1 μm der volumenbezogenen Partikelverteilung einen Anteil an feinen Partikeln von 5 bis 100 %, bevorzugt 10 bis 95%, besonders bevorzugt 15 bis 95 %, ganz besonders bevorzugt 20 bis 90 % und insbesondere bevorzugt von 40 bis 80 % und/oder einen $d_{90}$-Wert der volumenbezogene Partikelverteilungskurve zwischen 0,001 und 10 μm aufweist.

In einer speziell bevorzugten Ausführungsform wird zur Vorbereitung der eigentlichen Vermahlung mit überhitztem Wasserdampf eine Fließbettgegenstrahlmühle gemäß Abbildung 1 mit integriertem dynamischen Windsichter gemäß Abbildungen 2 und 2a zunächst über die zwei Heizdüsen (5a) (wovon in Abbildung 1 nur eine dargestellt ist), welche mit heißer Druckluft, bevorzugt bei 10 bar und 160°C, beaufschlagt werden, bis zu einer Mühlenaustrittstemperatur die höher liegt als der Taupunkt des Dampfes und/oder Betriebsmittel, bevorzugt ca. 105°C, aufgeheizt.

Der Mühle ist zur Abscheidung des Mahlgutes eine Filteranlage nachgeschaltet (nicht in Abbildung 1 gezeigt), dessen Filtergehäuse im unteren Drittel indirekt über angebrachte Heizschlangen mittels Sattdampf, bevorzugt 6 bar Sattdampf) ebenfalls zur Verhinderung von Kondensation beheizt wird. Alle Apparateoberflächen im Bereich der Mühle, des Abscheidefilters, sowie der Versorgungsleitungen für Dampf und heißer Druckluft sind besonders isoliert.

Nach Erreichen der gewünschten Aufheiztemperatur wird die Versorgung der Heizdüsen mit heißer Druckluft abgeschaltet und die Beaufschlagung der drei Mahldüsen mit überhitztem Wasserdampf, bevorzugt mit 38 bar(abs) bei 325 °C, gestartet.

Zum Schutz des im Abscheidefilter eingesetzten Filtermittels sowie zur Einstellung eines bestimmten Restwassergehaltes des Mahlgutes von vorzugsweise 2 bis 6 %, wird Wasser in der Startphase und während der Vermahlung in den Mahlraum der Mühle über eine mit Druckluft betriebene Zweistoffdüse in Abhängigkeit von der Mühlenaustrittstemperatur eingedüst.

Die Regelung der Aufgabemenge erfolgt in Abhängigkeit vom sich einstellenden Sichterstrom. Der Sichterstrom regelt die Aufgabemenge derart, dass ca. 70% des Nennstromes nicht überschritten werden können.

Als Eintragsorgan (4) fungiert dabei ein drehzahlgeregeltes Zellenrad, welches das Aufgabegut aus einem Vorlagebehälter über eine als barometrischer Abschluss dienende Taktschleuse in die unter Überdruck stehende Mahlkammer dosiert.

Die Zerkleinerung des Grobgutes erfolgt in den expandierenden Dampfstrahlen (Mahlgas). Gemeinsam mit dem entspannten Mahlgas steigen die Produktpartikel im Zentrum des Mühlenbehälters zum Sichtrad auf. Je nach eingestellter Sichterdrehzahl und Mahldampfmenge gelangen die Partikel, die eine ausreichende Feinheit aufweisen mit dem Mahldampf in den Feingutaustritt und von dort in das nachgeschaltete Abscheidesystem, während zu grobe Partikel zurück in die Mahlzone gelangen und einer nochmaligen Zerkleinerung unterworfen werden. Der Austrag des abgeschiedenen Feingutes aus dem Abscheidefilter in die nachfolgende Silierung und Abpackung geschieht mittels Zellenradschleuse.

Der an den Mahldüsen herrschende Mahldruck des Mahlgases, bzw. die daraus resultierenden Mahlgasmenge in Verbindung mit der Drehzahl des dynamischen Schaufelradsichters bestimmen die Feinheit der Kornverteilungsfunktion sowie die Oberkorngrenze.

In einer bevorzugten Ausführungsform wird das erfindungsgemäße Verfahren in einem Mahlsystem (Mahlapparatur), bevorzugt in einem Mahlsystem umfassend eine Strahlmühle, besonders bevorzugt umfassend eine Gegenstrahlmühle ausgeführt. Dazu wird ein zu zerkleinerndes Aufgabegut in expandierenden Gasstrahlen hoher Geschwindigkeit beschleunigt und durch Partikel-Partikel-Stöße zerkleinert. Als Strahlmühlen werden ganz besonders bevorzugt Fließbettgegenstrahlmühlen oder Dichtbettstrahlmühlen oder Spiralstrahlmühlen verwendet. Im Falle der ganz besonders bevorzugten Fließbettgegenstrahlmühle befinden sich im unteren Drittel der Mahlkammer zwei oder mehr Mahlstrahleinlässe, bevorzugt in Form von Mahldüsen, welche sich bevorzugt in einer horizontalen Ebene befinden. Die Mahlstrahleinlässe sind besonders bevorzugt so am Umfang des bevorzugt runden Mühlenbehälters angeordnet, dass sich die Mahlstrahlen alle an einem Punkt im Inneren des Mahlbehälters treffen. Insbesondere bevorzugt sind die Mahlstrahleinlässe gleichmäßig über den Umfang des Mahlbehälters verteilt. Im Falle von drei Mahlstrahleinlässen würde der Abstand somit jeweils 120° betragen.

In einer speziellen Ausführungsform des erfindungsgemäßen Verfahrens umfasst das Mahlsystem (Mahlapparatur) einen Sichter, bevorzugt einen dynamischen Sichter, besonders bevorzugt einen dynamischer Schaufelradsichter, insbesondere bevorzugt einen Sichter gemäß Abbildung 2 und 3.

In einer besonders bevorzugten Ausführungsform wird ein dynamischer Windsichter gemäß Abbildung 2a und 3a verwendet. Dieser dynamische Windsichter enthält ein Sichtrad und eine Sichtradwelle sowie ein Sichtergehäuse, wobei zwischen dem Sichtrad und dem Sichtergehäuse ein Sichterspalt und zwischen der Sichtradwelle und dem Sichtergehäuse eine Wellendurchführung gebildet ist, und ist dadurch gekennzeichnet, dass eine Spaltspülung von Sichterspalt und/oder Wellendurchführung mit komprimierten Gasen niedriger Energie erfolgt.

Durch die Verwendung eines Sichters in Kombination mit der unter den erfindungsgemäßen Bedingungen betriebenen Strahlmühle erfolgt eine Begrenzung des Oberkorns, wobei die gemeinsam mit den entspannten Gasstrahlen aufsteigenden Produktpartikel aus dem Zentrum des Mahlbehälters durch den Sichter geleitet werden und anschließend das Produkt, das eine ausreichende Feinheit aufweist, aus dem Sichter und aus der Mühle ausgeführt wird. Zu grobe Partikel gelangen zurück in die Mahlzone und werden einer weiteren Zerkleinerung unterworfen.

Im Mahlsystem kann ein Sichter als separate Einheit der Mühle nachgeschaltet werden, bevorzugt wird jedoch ein integrierter Sichter verwendet.

In einem besonders bevorzugten Vermahlungsprozeß ist dem eigentlichen Mahlschritt eine Aufheizphase vorangeschaltet, in der sichergestellt wird, dass der Mahlraum, besonders bevorzugt alle wesentlichen Bauteile der Mühle und/oder des Mahlsystems, an denen Wasser und/oder Wasserdampf kondensieren könnte, derart aufgeheizt wird/werden, dass dessen/deren Temperatur oberhalb des Taupunktes des Dampfes liegt. Das Aufheizen kann im Prinzip durch jede Heizmethode erfolgen. Bevorzugt erfolgt die Aufheizung jedoch dadurch, dass heißes Gas durch die Mühle und/oder das ganze Mahlsystem geleitet wird, so dass die Temperatur des Gases am Mühlenausgang höher ist als der Taupunkt des Dampfes. Dabei wird besonders bevorzugt darauf geachtet, dass das heiße Gas bevorzugt alle wesentliche Bauteile der Mühle und/oder des ganzen Mahlsystems, die mit dem Wasserdampf in Verbindung kommen, hinreichend aufheizt.

Als Heizgas kann prinzipiell jedes beliebige Gas und/oder Gasgemische verwendet werden, bevorzugt werden jedoch heiße Luft und/oder Verbrennungsgase und/oder Inertgase verwendet. Die Temperatur des heißen Gases liegt über dem Taupunkt des Wasserdampfes.

Das heiße Gas kann prinzipiell beliebig in den Mahlraum eingeführt werden. Vorzugsweise befinden sich dafür im Mahlraum Einlässe bzw. Düsen. Bei diesen Einlässen bzw. Düsen kann es sich um dieselben Einlässe bzw. Düsen handeln, durch die während der Mahlphase auch die Mahlstrahlen geleitet werden (Mahldüsen). Es ist aber auch möglich, dass im Mahlraum separate Einlässe bzw. Düsen (Heizdüsen) vorhanden sind, durch die das heiße Gas und/oder Gasgemisch eingeleitet werden kann. In einer bevorzugten Ausführungsform wird das Heizgas bzw. Heizgasgemisch durch zumindest zwei, bevorzugt drei oder mehr in einer Ebene angeordnete Einlässe bzw. Düsen eingeführt, welche so am Umfang des bevorzugt runden Mühlenbehälters angeordnet, dass sich die Strahlen alle an einem Punkt im Inneren des Mahlbehälters treffen. Insbesondere bevorzugt sind die Einlässe bzw. Düsen gleichmäßig über den Umfang des Mahlbehälters verteilt.

Während der Vermahlung wird durch die Mahlstrahleinlässe, bevorzugt in Form von Mahldüsen, als Betriebsmittel ein Gas und/oder ein Dampf, bevorzugt Wasserdampf und/oder ein Gas/Wasserdampf Gemisch entspannt. Dieses Betriebsmittel weist in der Regel eine wesentlich höhere Schallgeschwindigkeit als Luft (343 m/s), bevorzugt zumindest 450 m/s, auf. Vorteilhaft umfasst das Betriebsmittel Wasserdampf und/oder Wasserstoffgas und/oder Argon und/oder Helium. Besonders bevorzugt handelt es sich um überhitzten Wasserdampf. Um eine sehr feine Vermahlung zu erreichen, hat es sich als besonders vorteilhaft erwiesen, dass das Betriebsmittel mit einem Druck von 15 bis 250 bar, besonders bevorzugt von 20 bis 150 bar, ganz besonders bevorzugt 30 bis 70 bar und insbesondere bevorzugt 40 bis 65 bar in die Mühle entspannt wird. Ebenfalls besonders bevorzugt weist das Betriebsmittel eine Temperatur von 200 bis 800 °C, besonders bevorzugt 250 bis 600 °C und insbesondere 300 bis 400 °C auf.

Im Falle von Wasserdampf als Betriebsmittel, also insbesondere dann, wenn die Dampfzufuhrleitung an eine Wasserdampfquelle angeschlossen ist, erweist es sich als besonders vorteilhaft, wenn die Mahl- oder Einlassdüsen an eine Dampfzufuhrleitung angeschlossen sind, die mit Dehnungsbögen ausgestattet ist.

Weiterhin hat es sich als vorteilhaft erwiesen, wenn die Oberfläche der Strahlmühle einen möglichst kleinen Wert aufweist und/oder die Strömungswege zumindest weitgehend vorsprungsfrei sind und/oder wenn die Komponenten der Strahlmühle zur Vermeidung von Massenanhäufungen ausgelegt sind. Durch diese Maßnahmen kann eine Ablagerung des Mahlguts in der Mühle zusätzlich verhindert werden.

Anhand der nachfolgend beschriebenen bevorzugten und speziellen Ausführungsformen des erfindungsgemäßen Verfahrens sowie der bevorzugten und besonders geeigneten Ausführungen von Strahlmühlen sowie der Zeichnungen und Beschreibungen der Zeichnungen wird die Erfindung lediglich exemplarisch näher erläutert, d. h. sie ist nicht auf diese Ausführungs- und Anwendungsbeispiele oder auf die jeweiligen Merkmalskombinationen innerhalb einzelner Ausführungsbeispiele beschränkt.

Einzelne Merkmale, die im Zusammenhang mit konkreten Ausführungsbeispielen angeben und/oder dargestellt sind, sind nicht auf diese Ausführungsbeispiele oder die Kombination mit den übrigen Merkmalen dieser Ausführungsbeispiele beschränkt, sondern können im Rahmen der technischen Möglichkeiten, mit jeglichen anderen Varianten, auch wenn sie in den vorliegenden Unterlagen nicht gesondert behandelt sind, kombiniert werden.

Gleiche Bezugszeichen in den einzelnen Abbildungen und Abbildungen der Zeichnungen bezeichnen gleiche oder ähnliche oder gleich oder ähnlich wirkende Komponenten. Anhand der Darstellungen in der Zeichnung werden auch solche Merkmale deutlich, die nicht mit Bezugszeichen versehen sind, unabhängig davon, ob solche Merkmale nachfolgend beschrieben sind oder nicht. Andererseits sind auch Merkmale, die in der vorliegenden Beschreibung enthalten, aber nicht in der Zeichnung sichtbar oder dargestellt sind, ohne weiteres für einen Fachmann verständlich.

Wie oben bereits angedeutet kann im erfindungsgemäßen Verfahren eine Strahlmühle, bevorzugt eine Gegenstrahlmühle, mit integriertem Sichter, bevorzugt einem integrierten dynamischen Windsichter, zur Erzeugung feinster Partikel verwendet werden. Insbesondere bevorzugt enthält der Windsichter ein Sichtrad und eine Sichtradwelle sowie ein Sichtergehäuse, wobei zwischen dem Sichtrad und dem Sichtergehäuse ein Sichterspalt und zwischen der Sichtradwelle und dem Sichtergehäuse eine Wellendurchführung gebildet wird und derart betrieben wird, dass eine Spaltspühlung von Sichterspalt und/oder Wellendurchführung mit komprimierten Gasen niedriger Energie erfolgt.

Vorzugsweise wird dabei das Spühlgas mit einem Druck von nicht mehr als zumindest annähernd 0,4 bar, besonders bevorzugt nicht mehr als wenigstens ungefähr 0,3 bar und insbesondere nicht mehr als ca. 0,2 bar über dem Mühleninnendruck eingesetzt. Dabei kann der Mühleninnendruck zumindest ungefähr im Bereich von 0,1 bis 0,5 bar liegen.

Ferner ist es bevorzugt, wenn das Spühlgas mit einer Temperatur von ca. 80 bis etwa 120 °C, insbesondere annähernd 100 °C eingesetzt wird, und/oder wenn als Spühlgas niederenergetische Druckluft, insbesondere mit etwa 0,3 bar bis ca. 0,4 bar verwendet wird.

Die Drehzahl eines Sichtrotors des Windsichters und das innere Verstärkungsverhältnis V (= Di/DF), kann so gewählt oder eingestellt werden oder regelbar sein, dass die Umfangsgeschwindigkeit des Betriebsmittels (B) an einem dem Sichtrad zugeordneten Tauchrohr oder Austrittsstutzen bis zum 0,8-fachen der Schallgeschwindigkeit des Betriebsmediums erreicht. In der Formel V (=Di/DF) bedeuten Di = Innendurchmesser des Sichterrads (8), d.h. der Abstand zwischen den inneren Kanten der Schaufeln (34) und DF = Innendurchmesser des Tauchrohres (20). In einer besonders bevorzugten Ausführungsform beträgt der Innendurchmesser des Sichtrades Di = 280 mm und der Innendurchmesser des Tauchrohres DF = 100 mm. Zur Definition des Verstärkungsverhältnisses siehe auch Dr. R. Nied, "Strömungsmechanik und Thermodynamik in der mechanischen Verfahrenstechnik", erhältlich bei Unternehmensberatung Dr. Roland Nied, 86486 Bonstetten, Deutschland. Erhältlich ebenso bei NETZSCH-CONDUX Mahltechnik GmbH, Rodenbacher Chaussee 1, 63457 Hanau, Deutschland.

Dies kann dadurch weitergebildet sein, dass die Drehzahl eines Sichtrotors des Windsichters und das innere Verstärkungsverhältnis V (= Di/DF) so gewählt oder eingestellt oder regelbar sind, dass die Umfangsgeschwindigkeit des Betriebsmittels (B) an dem Tauchrohr oder Austrittsstutzen bis zum 0,7-fachen und besonders bevorzugt bis zum 0,6-fachen der Schallgeschwindigkeit des Betriebsmediums erreicht.

Insbesondere kann ferner mit Vorteil vorgesehen sein, dass der Sichtrotor eine mit abnehmendem Radius zunehmende lichte Höhe aufweist, wobei vorzugsweise die durchströmte Fläche des Sichtrotors zumindest annähernd konstant ist. Alternativ oder zusätzlich kann vorteilhafterweise sein, dass der Sichtrotor ein auswechselbares, mitrotierendes Tauchrohr aufweist. Bei noch einer weiteren Variante ist es bevorzugt, wenn eine Feingutaustrittskammer vorgesehen ist, die in Strömungsrichtung eine Querschnittserweiterung aufweist.

Weiterhin kann die erfindungsgemäße Strahlmühle mit Vorteil insbesondere einen Windsichter enthalten, der einzelne Merkmale oder Merkmalskombinationen des Windsichters gemäß der EP 0 472 930 B1 enthält. Durch diese Bezugnahme ist zur Vermeidung bloßer identischer Übernahme der gesamte Offenbarungsgehalt der EP 0 472 930 B1 vollumfänglich hierin aufgenommen. Insbesondere kann der Windsichter Mittel zum Abbau der Umfangskomponenten der Strömung gemäß der EP 0 472 930 B1 enthalten. Dabei kann insbesondere vorgesehen sein, dass ein dem Sichtrad des Windsichters zugeordneter Austrittsstutzen, der als Tauchrohr ausgebildet ist, in Strömungsrichtung eine vorzugsweise zur Vermeidung von Wirbelbildungen gerundet gestaltete Querschnittserweiterung aufweist.

Bevorzugte und/oder vorteilhafte Ausführungsformen des im efindungsgemäßen Verfahren verwendbaren Mahlsystems bzw. der Mühle ergeben sich aus den Abbildungen 1 bis 3a sowie der zugehörigen Beschreibung, wobei noch einmal betont sei, dass diese Ausführungsformen die Erfindung lediglich exemplarisch näher erläutern, d. h. sie ist nicht auf diese Ausführungs- und Anwendungsbeispiele oder auf die jeweiligen Merkmalskombinationen innerhalb einzelner Ausführungsbeispiele beschränkt.

| | |
|---|---|
| Abb. 1 | zeigt diagrammartig ein Ausführungsbeispiel einer Strahlmühle in einer teilweise geschnittenen Schemazeichnung, |
| Abb. 2 | zeigt ein Ausführungsbeispiel eines Windsichters einer Strahlmühle in vertikaler Anordnung und als schematischer Mittellängsschnitt, wobei dem Sichtrad das Auslassrohr für das Gemisch aus Sichtluft und Feststoffpartikeln zugeordnet ist, |
| Abb. 2a | zeigt ein Ausführungsbeispiel eines Windsichters analog Abbildung 2 jedoch mit Spaltspülung von Sichterspalt 8a und Wellendurchführung 35b, |
| Abb. 3 | zeigt in schematischer Darstellung und als Vertikalschnitt ein Sichtrad eines Windsichters |
| Abb. 3a | zeigt in schematischer Darstellung und als Vertikalschnitt ein Sichtrad eines Windsichters analog Abbildung 3 jedoch mit Spaltspülung von Sichterspalt 8a und Wellendurchführung 35b. |

In der Abb. 1 ist ein Ausführungsbeispiel einer Strahlmühle 1 mit einem zylindrischen Gehäuse 2, das eine

Mahlkammer 3 umschließt, einer Mahlgutaufgabe 4 etwa in der halben Höhe der Mahlkammer 3, zumindest einem Mahlstrahleneinlass 5 im unteren Bereich der Mahlkammer 3 und einem Produktauslass 6 im oberen Bereich der Mahlkammer 3 gezeigt. Dort ist ein Windsichter 7 mit einem drehbaren Sichtrad 8 angeordnet, mit dem das Mahlgut (nicht gezeigt) klassiert wird, um nur Mahlgut unterhalb einer bestimmten Korngröße durch den Produktauslass 6 aus der Mahlkammer 3 abzuführen und Mahlgut mit einer Korngröße über dem ausgewählten Wert einem weiteren Mahlvorgang zuzuführen.

Das Sichtrad 8 kann ein bei Windsichtern übliches Sichtrad sein, dessen Schaufeln (siehe später z. B. im Zusammenhang mit Abb. 3) radial verlaufende Schaufelkanäle begrenzen, an deren äußeren Enden die Sichtluft eintritt und Partikel kleinerer Korngröße oder Masse zum zentralen Auslass und zum Produktauslass 6 mitschleppt, während größere Partikel oder Partikel größerer Masse unter dem Einfluss der Fliehkraft abgewiesen werden. Besonders bevorzugt sind der Windsichter 7 und/oder zumindest dessen Sichtrad 8 mit wenigstens einem Gestaltungsmerkmal gemäß der EP 0 472 930 B1 ausgestattet.

Es kann nur ein Mahlstrahleinlass 5 z. B. bestehend aus einer einzigen, radial gerichteten Einlassöffnung oder Einlassdüse 9 vorgesehen sein, um einen einzigen Mahlstrahl 10 auf die Mahlgutpartikel, die von der Mahlgutaufgabe 4 aus in den Bereich des Mahlstrahles 10 gelangen, mit hoher Energie auftreffen und die Mahlgutpartikel in kleinere Teilpartikel zerlegen zu lassen, die vom Sichtrad 8 angesaugt und, soweit sie eine entsprechend geringe Größe bzw. Masse haben, durch den Produktauslass 6 nach außen gefördert werden. Eine bessere Wirkung wird jedoch mit paarweise diametral einander gegenüberliegenden Mahlstrahleinlässen 5 erzielt, die zwei aufeinander prallende Mahlstrahlen 10 bilden, die die Partikelzerlegung intensiver bewirken als dies mit nur einem Mahlstrahl 10 möglich ist, insbesondere wenn mehrere Mahlstrahlpaare erzeugt werden.

Bevorzugt werden zwei oder mehr Mahlstrahleinlässe, bevorzugt Mahldüsen, insbesondere 3, 4, 5, 6, 7, 8, 9, 10, 11 oder 12 Mahlstrahleinlässe verwendet, die im unteren Drittel des, bevorzugt zylinderförmigen, Gehäuses der Mahlkammer angebracht sind. Diese Mahlstrahleinlässe sind idealerweise in einer Ebene und gleichmäßig über den Umfang des Mahlbehälters verteilt angeordnet, so dass sich die Mahlstrahlen alle an einem Punkt im Inneren des Mahlbehälters treffen. Insbesondere bevorzugt sind die Einlässe bzw. Düsen gleichmäßig über den Umfang des Mahlbehälters verteilt. Bei drei Mahlstrahlen wäre das ein Winkel von 120° zwischen den jeweiligen Einlässen bzw. Düsen. Allgemein kann man sagen, dass je größer der Mahlraum ist, umso mehr Einlässe bzw. Mahldüsen verwendet werden.

Der Mahlraum kann in einer bevorzugten Ausführungsform des erfindungsgemäßen Verfahrens zusätzlich zu den Mahlstrahleinlässen Heizöffnungen 5a, bevorzugt in Form von Heizdüsen, enthalten, durch die heißes Gas in der Aufheizphase in die Mühle geleitet werden kann. Diese Düsen bzw. Öffnungen können - wie zuvor bereits geschildert - in derselben Ebene angeordnet sein wie die Mahlöffnungen bzw. -düsen 5. Es können eine, bevorzugt aber auch mehrere, besonders bevorzugt 2, 3, 4, 5, 6, 7 oder 8 Heizöffnungen bzw. -düsen 5a enthalten sein.

In einer ganz besonders bevorzugten Ausführungsform enthält die Mühle zwei Heizdüsen bzw. -öffnungen und drei Mahldüsen bzw. -öffnungen.

Ferner kann beispielsweise die Verarbeitungstemperatur beeinflusst werden durch Einsatz einer internen Heizquelle 11 zwischen Mahlgutaufgabe 4 und dem Bereich der Mahlstrahlen 10 oder einer entsprechenden Heizquelle 12 im Bereich außerhalb der Mahlgutaufgabe 4 oder durch Verarbeitung von Partikeln eines ohnehin schon warmen Mahlgutes, das unter Vermeidung von Wärmeverlusten in die Mahlgutaufgabe 4 gelangt, wozu ein Zuführungsrohr 13 von einem temperaturisolierenden Mantel 14 umgeben ist. Die Heizquelle 11 oder 12 kann, wenn sie eingesetzt wird, dem Grund nach beliebig sein und daher zweckgerichtet einsatzfähig und gemäß der Verfügbarkeit am Markt ausgewählt werden, so dass weitere Erläuterungen dazu nicht erforderlich sind.

Für die Temperatur ist insbesondere die Temperatur des Mahlstrahls oder der Mahlstrahlen 10 relevant und die Temperatur des Mahlgutes sollte dieser Mahlstrahltemperatur zumindest annähernd entsprechen.

Zur Bildung der durch Mahlstrahleinlässe 5 in die Mahlkammer 3 eingebrachten Mahlstrahlen 10 wird dazu beim vorliegenden Ausführungsbeispiel Heißdampf verwendet. Dabei ist davon auszugehen, dass der Wärmeinhalt des Wasserdampfes nach der Einlassdüse 9 des jeweiligen Mahlstrahleinlasses 5 nicht wesentlich geringer ist als vor dieser Einlassdüse 9. Weil die für die Prallzerkleinerung notwendige Energie primär als Strömungsenergie zur Verfügung stehen soll, wird demgegenüber der Druckabfall zwischen dem Einlass 15 der Einlassdüse 9 und deren Auslass 16 erheblich sein (die Druckenergie wird weitestgehend in Strömungsenergie umgesetzt sein) und auch der Temperaturabfall wird nicht unerheblich sein. Insbesondere dieser Temperaturabfall soll durch die Erwärmung des Mahlgutes so weit kompensiert sein, dass Mahlgut und Mahlstrahl 10 im Bereich des Zentrums 17 der Mahlkammer 3 bei zumindest zwei aufeinander treffenden Mahlstrahlen 10 oder einem Vielfachen von zwei Mahlstrahlen 10 die gleiche Temperatur haben.

Zur Gestaltung und Durchführung der Aufbereitung des Mahlstrahles 10 aus Heißdampf insbesondere in Form eines geschlossenen Systems wird auf die DE 198 24 062 A1 verwiesen, deren vollständiger Offenbarungsgehalt diesbezüglich zur Vermeidung bloßer identischer Übernahme durch die vorliegende Bezugnahme vollumfänglich hierin aufgenommen ist. Durch ein geschlossenes System ist beispielsweise eine Mahlung von heißer Schlacke als Mahlgut mit optimalem Wirkungsgrad möglich.

Bei der Darstellung des vorliegenden Ausführungsbeispiels der Strahlmühle 1 ist stellvertretend für jegliche Zufuhr eines Betriebsmittels oder Betriebsmediums B eine Reservoir- oder Erzeugungseinrichtung 18, die beispielsweise ein Tank 18a darstellt, woraus das Betriebsmittel oder Betriebsmedium B über Leitungseinrichtungen 19 zu dem Mahlstrahleinlass 5 oder den Mahlstrahleinlässen 5 zur Bildung des Mahlstrahles 10 bzw. der Mahlstrahlen 10 geleitet wird.

Insbesondere ausgehend von einer mit einem Windsichter 7 ausgestatteten Strahlmühle 1, wobei die diesbezüglichen Ausführungsbeispiele hierin nur als exemplarisch und nicht als beschränkend beabsichtigt und zu verstehen sind, wird mit dieser Strahlmühle 1 mit einem integrierten dynamischen Windsichter 7 ein Verfahren zur Erzeugung feinster Partikel durchgeführt. Die Neuerung gegenüber herkömmlichen Strahlmühlen besteht, neben der Tatsache, dass der Mahlphase eine Aufheizphase vorgeschaltet ist, in der alle mit dem Dampf in Berührung kommenden Teile auf eine Temperatur oberhalb des Taupunkes des Dampfes aufgeheizt werden, und der Tatsache, dass ein bevorzugt integrierter Sichter verwendet wird darin, dass die Drehzahl des Sichtrotors oder Sichtrades 8 des Windsichters 7 und das innere Verstärkungsverhältnis V (= Di/DF) bevorzugt so gewählt, eingestellt oder geregelt werden, dass die Umfangsgeschwindigkeit eines Betriebsmittels B an einem dem Sichtrad 8 zugeordneten Tauchrohr oder Austrittsstutzen 20 bis zum 0,8-fachen, vorzugsweise bis zum 0,7-fachen und besonders bevorzugt bis zum 0,6-fachen der Schallgeschwindigkeit des Betriebsmediums oder -mittels B erreicht.

Unter Bezugnahme auf die vorerläuterte Variante mit Heißdampf als Betriebsmittel oder Betriebsmedium B oder als Alternative dazu ist es besonders vorteilhaft, als Betriebsmittel Gase oder Dämpfe B zu verwenden, die eine höhere und insbesondere wesentlich höhere Schallgeschwindigkeit als Luft (343 m/s) aufweisen. Speziell werden als Betriebsmittel Gase oder Dämpfe B verwendet, die eine Schallgeschwindigkeit von wenigstens 450 m/s aufweisen. Damit wird die Erzeugung und die Ausbeute feinster Partikel gegenüber Verfahren mit anderen Betriebsmitteln, wie sie gemäß Kenntnissen aus der Praxis herkömmlich eingesetzt werden, deutlich verbessert und somit das Verfahren insgesamt optimiert.

Als das Betriebsmittel B wird ein Fluid verwendet, bevorzugt der bereits erwähnte Wasserdampf, aber auch Wasserstoffgas oder Heliumgas.

In einer bevorzugten Ausführungsform ist die Strahlmühle 1, bei der es sich insbesondere um eine Fließbettstrahlmühle oder eine Dichtbettstrahlmühle oder eine Spiralstrahlmühle handelt, mit dem integrierten dynamischen Windsichter 7 zur Erzeugung feinster Partikel entsprechend so gestaltet oder ausgelegt oder mit geeigneten Einrichtungen versehen, dass die Drehzahl des Sichtrotors oder Sichtrades 8 des Windsichters 7 und das innere Verstärkungsverhältnis V (= Di/DF) so gewählt oder eingestellt oder regelbar oder steuerbar sind, dass die Umfangsgeschwindigkeit des Betriebsmittels B am Tauchrohr oder Austrittsstutzen 20 bis zum 0,8-fachen, vorzugsweise bis zum 0,7-fachen und besonders bevorzugt bis zum 0,6-fachen der Schallgeschwindigkeit des Betriebsmediums oder -mittels B erreicht.

Weiterhin ist die Strahlmühle 1 bevorzugt mit einer Quelle, beispielsweise der Reservoir- oder Erzeugungseinrichtung 18 für Wasserdampf oder Heißdampf oder einer anderen geeigneten Reservoir- oder Erzeugungseinrichtung, für ein Betriebsmittel B ausgestattet oder ist ihr eine solche Betriebsmittelquelle zugeordnet, woraus für den Betrieb ein Betriebsmittel B mit einer höheren und insbesondere wesentlich höheren Schallgeschwindigkeit als Luft (343 m/s), wie vorzugsweise einer Schallgeschwindigkeit von wenigstens 450 m/s, eingespeist wird. Diese Betriebsmittelquelle, wie beispielsweise die Reservoir- oder Erzeugungseinrichtung 18 für Wasserdampf oder Heißdampf, enthält Gase oder Dämpfe B zur Verwendung beim Betrieb der Strahlmühle 1, und zwar insbesondere den bereits oben erwähnten Wasserdampf, wobei aber auch Wasserstoffgas oder Heliumgas bevorzugte Alternativen darstellen.

Insbesondere bei der Verwendung von heißem Wasserdampf als Betriebsmittel B ist es vorteilhaft, mit Dehnungsbögen (nicht gezeigt) ausgestattete Leitungseinrichtungen 19, die dann auch als Dampfzufuhrleitung zu bezeichnen sind, zu den Einlass- oder Mahldüsen 9 vorzusehen, also vorzugsweise dann, wenn die Dampfzufuhrleitung an eine Wasserdampfquelle als Reservoir- oder Erzeugungseinrichtung 18 angeschlossen ist.

Ein weiterer vorteilhafter Aspekt beim Einsatz von Wasserdampf als Betriebsmittel B besteht darin, die Strahlmühle 1 mit einer möglichst kleinen Oberfläche zu versehen, oder mit anderen Worten, die Strahlmühle 1 hinsichtlich einer möglichst kleinen Oberfläche zu optimieren. Gerade im Zusammenhang mit dem Wasserdampf als Betriebsmittel B ist es besonders vorteilhaft, Wärmeaustausch oder Wärmeverlust und damit Energieverlust im System zu vermeiden. Diesem Zweck dient auch die weitere alternative oder zusätzlich Ausgestaltungsmaßnahme, nämlich die Komponenten der Strahlmühle 1 zur Vermeidung von Massenanhäufungen auszulegen oder dahingehend zu optimieren. Dies kann beispielsweise durch Verwendung von möglichst dünnen Flanschen in den und zum Anschluss der Leitungseinrichtungen 19 realisiert werden.

Energieverlust und auch andere strömungsrelevante Beeinträchtigungen können ferner dadurch eingedämmt oder vermieden werden, wenn die Komponenten der Strahlmühle 1 zur Vermeidung von Kondensation ausgelegt oder optimiert sind. Es können zu diesem Zweck sogar spezielle Einrichtungen (nicht gezeigt) zur Kondensationsvermeidung enthalten sein. Weiterhin ist es von Vorteil, wenn die Strömungswege zumindest weitgehend vorsprungsfrei oder dahingehend optimiert sind. In anderen Worten, wird mit diesen Ausgestaltungsvarianten einzeln oder in beliebigen Kombinationen das Prinzip umgesetzt, möglichst viel oder alles zu vermeiden, was kalt werden kann und wo sich somit Kondensation einstellen kann.

Weiterhin ist es vorteilhaft und daher bevorzugt, wenn der Sichtrotor eine mit abnehmendem Radius, also zu seiner Achse hin zunehmende lichte Höhe aufweist, wobei insbesondere die durchströmte Fläche des Sichtrotors zumindest annähernd konstant ist. Zunächst oder alternativ kann eine Feingutaustrittskammer vorgesehen sein, die in Strömungsrichtung eine Querschnittserweiterung aufweist.

Eine besonders bevorzugte Ausgestaltung besteht bei der Strahlmühle 1 darin, dass der Sichtrotor 8 ein auswechselbares, mit rotierendes Tauchrohr 20 aufweist.

Nachfolgend werden unter Bezugnahme auf die Abb. 2 und 3 weitere Details und Varianten bevorzugter Ausgestaltungen der Strahlmühle 1 und ihrer Komponenten erläutert.

Die Strahlmühle 1 enthält bevorzugt, wie der schematischen Darstellung in der Abb. 2 zu entnehmen ist, einen integrierten Windsichter 7, bei dem es sich beispielsweise bei Bauarten der Strahlmühle 1 als Fließbettstrahlmühle oder als Dichtbettstrahlmühle oder als Spiralstrahlmühle um einen dynamischen Windsichter 7 handelt, der vorteilhafterweise im Zentrum der Mahlkammer 3 der Strahlmühle 1 angeordnet ist. In Abhängigkeit von Mahlgasvolumenstrom und Sichterdrehzahl kann die angestrebte Feinheit des Mahlgutes beeinflusst werden.

Bei dem Windsichter 7 der Strahlmühle 1 gemäß der Abb. 2 wird der gesamte vertikale Windsichter 7 von einem Sichtergehäuse 21 umschlossen, das im wesentlichen aus dem Gehäuseoberteil 22 und dem Gehäuseunterteil 23 besteht. Das Gehäuseoberteil 22 und das Gehäuseunterteil 23 sind am oberen bzw. unteren Rand mit je einem nach außen gerichteten Umfangsflansch 24 bzw. 25 versehen. Die beiden Umfangsflansche 24, 25 liegen im Einbau- oder Funktionszustand des Windsichters 8 aufeinander und sind durch geeignete Mittel gegeneinander fixiert. Geeignete Mittel zum Fixieren sind beispielsweise Schraubverbindungen (nicht gezeigt). Als lösbare Befestigungsmittel können auch Klammern (nicht gezeigt) oder dergleichen dienen.

An einer praktisch beliebigen Stelle des Flanschumfangs sind beide Umfangsflansche 24 und 25 durch ein Gelenk 26 miteinander so verbunden, dass das Gehäuseoberteil 22 nach dem Lösen der Flanschverbindungsmittel gegenüber dem Gehäuseunterteil 23 nach oben in Richtung des Pfeils 27 geschwenkt werden kann und das Gehäuseoberteil 22 von unten sowie das Gehäuseunterteil 23 von oben zugänglich sind. Das Gehäuseunterteil 23 seinerseits ist zweiteilig ausgebildet und es besteht im Wesentlichen aus dem zylindrischen Sichtraumgehäuse 28 mit dem Umfangsflansch 25 an seinem oberen offenen Ende und einem Austragkonus 29, der sich nach unten kegelförmig verjüngt. Der Austragskonus 29 und das Sichtraumgehäuse 28 liegen am oberen bzw. unteren Ende mit Flanschen 30, 31 aufeinander und die beiden Flansche 30, 31 von Austragkonus 29 und Sichtraumgehäuse 28 sind wie die Umfangsflansche 24, 25 durch lösbare Befestigungsmittel (nicht gezeigt) miteinander verbunden. Das so zusammengesetzte Sichtergehäuse 21 ist in oder an Tragarmen 28a aufgehängt, von denen mehrere möglichst gleichmäßig beabstandet um den Umfang des Sichters- oder Verdichtergehäuses 21 des Windsichters 7 der Strahlmühle 1 verteilt sind und am zylindrischen Sichtraumgehäuse 28 angreifen.

Wesentliches Teil der Gehäuseeinbauten des Windsichters 7 ist wiederum das Sichtrad 8 mit einer oberen Deckscheibe 32, mit einer dazu axial beabstandeten unteren abströmseitigen Deckscheibe 33 und mit zwischen den Außenrändern der beiden Deckscheiben 32 und 33 angeordneten, mit diesen fest verbundenen und gleichmäßig um den Umfang des Sichtrades 8 verteilten Schaufeln 34 mit zweckmäßiger Kontur. Bei diesem Windsichter 7 wird der Antrieb des Sichtrades 8 über die obere Deckscheibe 32 bewirkt, während die untere Deckscheibe 33 die abströmseitige Deckscheibe ist. Die Lagerung des Sichtrades 8 umfasst eine in zweckmäßiger Weise zwangsweise angetriebene Sichtradwelle 35, die mit dem oberen Ende aus dem Sichtergehäuse 21 herausgeführt ist und mit ihrem unteren Ende innerhalb des Sichtergehäuses 21 in fliegender Lagerung drehfest das Sichtrad 8 trägt. Die Herausführung der Sichtradwelle 35 aus dem Sichtergehäuse 21 erfolgt in einem Paar bearbeiteter Platten 36, 37, die das Sichtergehäuse 21 am oberen Ende eines nach oben kegelstumpfförmig verlaufenden Gehäuseendabschnittes 38 abschließen, die Sichtradwelle 35 führen und diesen Wellendurchtritt ohne Behinderung der Drehbewegungen der Sichtradwelle 35 abdichten. Zweckmäßigerweise kann die obere Platte 36 als Flansch drehfest der Sichtradwelle 35 zugeordnet und über Drehlager 35a drehbar auf der unteren Platte 37 abgestützt sein, die ihrerseits einem Gehäuseendabschnitt 38 zugeordnet ist. Die Unterseite der abströmseitigen Deckscheibe 33 liegt in der gemeinsamen Ebene zwischen den Umfangsflanschen 24 und 25, so dass das Sichtrad 8 in seiner Gesamtheit innerhalb des klappbaren Gehäuseoberteils 22 angeordnet ist. Im Bereich des konischen Gehäuseendabschnittes 38 weist das Gehäuseoberteil 22 außerdem einen rohrartigen Produktaufgabestutzen 39 der Mahlgutaufgabe 4 auf, dessen Längsachse parallel zur Drehachse 40 des Sichtrades 8 und seiner Antriebs- oder Sichtradwelle 35 verläuft und der möglichst weit von dieser Drehachse 40 des Sichtrades 8 und seiner Antriebs- oder Sichtradwelle 35 entfernt, am Gehäuseoberteil 22 radial außen liegend angeordnet ist.

In einer besonders bevorzugten Ausführungsform gemäß Abbildung 2a und 3a enthält der integrierte dynamische Windsichter 1 ein Sichtrad 8 und eine Sichtradwelle 35 sowie ein Sichtergehäuse, wie bereits erläutert wurde. Dabei ist zwischen dem Sichtrad 8 und dem Sichtergehäuse 21 ein Sichterspalt 8a definiert und ist zwischen der Sichtradwelle und dem Sichtergehäuse 21 eine Wellendurchführung 35b gebildet (Siehe dazu Abb. 2a und 3a). Insbesondere ausgehend von einer mit einem derartigen Windsichter 7 ausgestatteten Strahlmühle 1, wobei die diesbezüglichen Ausführungsbeispiele hierbei nur exemplarisch und nicht als beschränkend zu verstehen sind, wird mit dieser Strahlmühle 1, mit einem integrierten dynamischen Windsichter 7 ein Verfahren zur Erzeugung feinster Partikel durchgeführt. Die Neuerung gegenüber herkömmlichen Strahlmühlen besteht dabei neben der Tatsache, dass der Mahlraum vor der Mahlphase auf eine Temperatur oberhalb des Taupunktes des Dampfes aufgeheizt wird, darin dass eine Spaltspühlung von Sichterspalt 8a und/oder Wellendurchführung 35b mit komprimierten Gasen niedriger Energie erfolgt. Das Besondere dieser Ausgestaltung ist gerade die Kombination der Verwendung dieser komprimierten niedrig energetischen Gase mit dem energiereichen Heißdampf, mit dem die Mühle durch die Mahlstrahleinlässe, insbesondere Mahldüsen oder darin enthaltende Mahldüsen, beschickt wird. Es kommen somit gleichzeitig hochenergetische Medien und niedrigenergetische Medien zum Einsatz.

Sowohl in der Ausführungsform nach Abbildung 2 und 3 bzw. 2a und 3a nimmt das Sichtergehäuse 21 den achsgleich zum Sichtrad 8 angeordneten rohrförmigen Austrittsstutzen 20 auf, der mit seinem oberen Ende dicht unterhalb der abströmseitigen Deckscheibe 33 des Sichtrades 8 liegt, ohne jedoch mit diesem verbunden zu sein. An das untere Ende des als Rohr ausgebildeten Austrittsstutzens 20 ist eine Austrittskammer 41 achsgleich angesetzt, die ebenfalls rohrförmig ist, deren Durchmesser jedoch wesentlich größer ist als der Durchmesser des Austrittsstutzens 20 und beim vorliegenden Ausführungsbeispiel zumindest doppelt so groß wie der Durchmesser des Austrittsstutzens 20 ist. Am Übergang zwischen dem Austrittsstutzen 20 und der Austrittskammer 41 liegt also ein deutlicher Durchmessersprung vor. Der Austrittsstutzen 20 ist in eine obere Deckplatte 42 der Austrittskammer 41 eingesetzt. Unten ist die Austrittskammer 41 durch einen abnehmbaren Deckel 43 verschlossen. Die Baueinheit aus Austrittsstutzen 20 und Austrittskammer 41 ist in mehreren Tragarmen 44 gehalten, die sternförmig gleichmäßig um den Umfang der Baueinheit verteilt, mit ihren inneren Enden im Bereich des Austrittsstutzens 20 fest mit der Baueinheit verbunden und mit ihren äußeren Enden am Sichtergehäuse 21 befestigt sind.

Der Austrittsstutzen 20 ist von einem kegelförmigen Ringgehäuse 45 umgeben, dessen unterer, größerer Außendurchmesser zumindest etwa dem Durchmesser der Austrittskammer 41 und dessen oberer, kleinerer Außendurchmesser zumindest etwa dem Durchmesser des Sichtrades 8 entspricht. An der konischen Wand des Ringgehäuses 45 enden die Tragarme 44 und sind mit dieser Wand fest verbunden, die ihrerseits wieder Teil der Baueinheit aus Austrittsstutzen 20 und Austrittskammer 41 ist.

Die Tragarme 44 und das Ringgehäuse 45 sind Teile der Spüllufteinrichtung (nicht gezeigt), wobei die Spülluft das Eindringen von Materie aus dem Innenraum des Sichtergehäuses 21 in den Spalt zwischen dem Sichtrad 8 oder genauer dessen unterer Deckscheibe 3 und dem Austrittsstutzen 20 verhindert. Um diese Spülluft in das Ringgehäuse 45 und von dort in den freizuhaltenden Spalt gelangen zu lassen, sind die Tragarme 44 als Rohre ausgebildet, mit ihren äußeren Endabschnitten durch die Wand des Sichtergehäuses 21 hindurchgeführt und über einen Ansaugfilter 46 an eine Spülluftquelle (nicht gezeigt) angeschlossen. Das Ringgehäuse 45 ist nach oben durch eine Lochplatte 47 abgeschlossen und der Spalt selbst kann durch eine axial verstellbare Ringscheibe im Bereich zwischen Lochplatte 47 und unterer Deckscheibe 33 des Sichtrades 8 einstellbar sein.

Der Auslass aus der Austrittskammer 41 wird von einem Feingutaustragrohr 48 gebildet, das von außen in das Sichtergehäuse 21 hineingeführt ist und in tangentialer Anordnung an die Austrittskammer 41 angeschlossen ist. Das Feingutaustragrohr 48 ist Bestandteil des Produktauslasses 6. Der Verkleidung der Einmündung des Feingutaustragrohrs 48 an die Austrittskammer 41 dient ein Abweiskegel 49.

Am unteren Ende des konischen Gehäuseendabschnittes 38 sind in horizontaler Anordnung eine Sichtlufteintrittsspirale 50 und ein Grobgutaustrag 51 dem Gehäuseendabschnitt 38 zugeordnet. Die Drehrichtung der Sichtlufteintrittsspirale 50 ist der Drehrichtung des Sichtrades 8 entgegengerichtet. Der Grobgutaustrag 51 ist dem Gehäuseendabschnitt 38 abnehmbar zugeordnet, wobei dem unteren Ende des Gehäuseendabschnittes 38 ein Flansch 52 und dem oberen Ende des Grobgutaustrages 51 ein Flansch 53 zugeordnet und beide Flansche 52 und 53 wiederum durch bekannte Mittel lösbar miteinander verbunden sind, wenn der Windsichter 7 betriebsbereit ist.

Die auszulegende Dispersionszone ist mit 54 bezeichnet. An der Innenkante bearbeitete (angefaste) Flansche für eine saubere Strömungsführung und eine einfache Auskleidung sind mit 55 bezeichnet.

Schließlich ist noch an die Innenwand des Austrittsstutzens 20 ein auswechselbares Schutzrohr 56 als Verschleißteil angelegt und kann ein entsprechendes auswechselbare Schutzrohr 57 an die Innenwand der Austrittskammer 41 angelegt sein.

Zu Beginn des Betriebs des Windsichters 7 im dargestellten Betriebszustand wird über die Sichtlufteintrittsspirale 50 Sichtluft in den Windsichter 7 unter einem Druckgefälle und mit einer zweckentsprechend gewählten Eintrittsgeschwindigkeit eingeführt. Infolge der Einführung der Sichtluft mittels einer Spirale insbesondere in Verbindung mit der Konizität des Gehäuseendabschnittes 38 steigt die Sichtluft spiralförmig nach oben in den Bereich des Sichtrades 8. Gleichzeitig wird das "Produkt" aus Feststoffpartikeln unterschiedlicher Masse über den Produktaufgabestutzen 39 in das Sichtergehäuse 21 eingegeben. Von diesem Produkt gelangt das Grobgut, d. h. der Partikelanteil mit größerer Masse entgegen der Sichtluft in den Bereich des Grobgutaustrages 51 und wird zur Weiterverarbeitung bereitgestellt. Das Feingut, d. h. der Partikelanteil mit geringerer Masse wird mit der Sichtluft vermischt, gelangt von außen nach innen radial durch das Sichtrad 8 in den Austrittsstutzen 20, in die Austrittskammer 41 und schließlich über ein Feingutaustrittsrohr 48 in einen Feingutaustritt oder - auslass 58, sowie von dort in einen Filter, in dem das Betriebsmittel in Form eines Fluides, wie beispielsweise Luft, und Feingut voneinander getrennt werden. Gröbere Feingutbestandteile werden

aus dem Sichtrad 8 radial herausgeschleudert und dem Grobgut zugemischt, um das Sichtergehäuse 21 mit dem Grobgut zu verlassen oder so lange im Sichtergehäuse 21 zu kreisen, bis es zu Feingut einer solchen Körnung geworden ist, dass es mit der Sichtluft ausgetragen wird.

Infolge der abrupten Querschnittserweiterung vom Austrittsstutzen 20 zur Austrittskammer 41 findet dort eine deutliche Verringerung der Strömungsgeschwindigkeit des Feingut-Luft-Gemisches statt. Dieses Gemisch wird also mit sehr geringer Strömungsgeschwindigkeit durch die Austrittskammer 41 über das Feingutaustrittsrohr 48 in den Feingutauslass 58 gelangen und an der Wand der Austrittskammer 41 nur in geringem Maße Abrieb erzeugen. Deswegen ist das Schutzrohr 57 auch nur eine höchst vorsorgliche Maßnahme. Die aus Gründen einer guten Trenntechnik hohe Strömungsgeschwindigkeit im Sichtrad 8 herrscht jedoch noch im Austrag- oder Austrittsstutzen 20, deshalb das Schutzrohr 56 wichtiger ist als das Schutzrohr 57. Besonders bedeutsam ist der Durchmessersprung mit einer Durchmessererweiterung beim Übergang vom Austrittsstutzen 20 in die Austrittskammer 41.

Im übrigen kann der Windsichter 7 durch die Unterteilung des Sichtergehäuses 21 in der beschriebenen Weise und die Zuordnung der Sichterkomponenten zu den einzelnen Teilgehäusen wiederum gut gewartet werden und können schadhaft gewordene Komponenten mit relativ geringem Aufwand und innerhalb kurzer Wartungszeiten ausgewechselt werden.

Während in der schematischen Darstellung der Abb. 2 bzw. 2a das Sichtrad 8 mit den beiden Deckscheiben 32 und 33 und dem zwischen diesen angeordneten Schaufelkranz 59 mit den Schaufeln 34 noch in bereits bekannter, üblicher Form mit parallelen und parallelflächigen Deckscheiben 32 und 33 dargestellt ist, ist in Abb. 3 bzw. 3a das Sichtrad 8 für ein weiteres Ausführungsbeispiel des Windsichters 7 einer vorteilhaften Weiterbildung dargestellt.

Dieses Sichtrad 8 gemäß der Abb. 3 bzw. 3a enthält zusätzlich zu dem Schaufelkranz 59 mit den Schaufeln 34 die obere Deckscheibe 32 und die dazu axial beabstandete untere abströmseitige Deckscheibe 33 und ist um die Drehachse 40 und damit die Längsachse des Windsichters 7 drehbar. Die diametrale Ausdehnung des Sichtrades 8 ist senkrecht zur Drehachse 40, d. h. zur Längsachse des Windsichters 7, unabhängig davon ob die Drehachse 40 und damit die genannte Längsachse senkrecht steht oder horizontal verläuft. Die untere abströmseitige Deckscheibe 33 umschließt konzentrisch den Austrittsstutzen 20. Die Schaufeln 34 sind mit beiden Deckscheiben 33 und 32 verbunden. Die beiden Deckscheiben 32 und 33 sind nun abweichend vom Stand der Technik konisch ausgebildet und zwar vorzugsweise derart, dass der Abstand der oberen Deckscheibe 32 von der abströmseitigen Deckscheibe 33 vom Kranz 59 der Schaufeln 34 nach innen, d. h. zur Drehachse 40 hin, größer wird und zwar bevorzugt kontinuierlich, wie beispielsweise linear oder nicht linear, und mit weiterem Vorzug so, dass die Fläche des durchströmten Zylindermantels für jeden Radius zwischen Schaufelaustrittskanten und Austrittsstutzen 20 zumindest annähernd konstant bleibt. Die infolge des kleiner werdenden Radius bei bekannten Lösungen geringer werdende Abströmgeschwindigkeit bleibt bei dieser Lösung zumindest annähernd konstant.

Außer der vorstehend und in der Abb. 3 und 3a erläuterten Variante der Gestaltung der oberen Deckscheibe 32 und der unteren Deckscheibe 33 ist es auch möglich, dass nur eine dieser beiden Deckscheiben 32 oder 33 in der erläuterten Weise konisch ausgebildet ist und die andere Deckscheibe 33 bzw. 32 eben ist, wie dies im Zusammenhang mit dem Ausführungsbeispiel gemäß der Abb. 2 für beide Deckscheiben 32 und 33 der Fall ist. Insbesondere kann dabei die Form der nicht parallelflächigen Deckscheibe derart sein, dass zumindest annähernd so, dass die Fläche des durchströmten Zylindermantels für jeden Radius zwischen Schaufelaustrittskanten und Austrittsstutzen 20 konstant bleibt.

Ein wesentlicher Schritt zur Einstellung der Silanolgruppendichte und Anordnung der Silanolgruppen auf der Fällungskieselsäureoberfläche, neben der Fällung, bei der die kettenförmige Struktur aufgebaut wird, ist die in Schritt 5 durchzuführende Temperung. Diese Temperung kann batchweise oder kontinuierlich durchgeführt werden. Für die Temperung kann z. B. ein Wirbelbett-, Fließbett-, oder Drehrohrreaktor verwendet werden. Dabei ist darauf zu achten, dass während der Temperung eine homogene Temperaturverteilung und eine homogene Prozessgasathmosphäre sichergestellt wird, so dass alle Fällungskieselsäurepartikel gleichen Bedingungen ausgesetzt werden. Das Prozessgas muss eine ausreichende Wasserdampfkonzentration aufweisen. Bevorzugt beträgt die Wasserdampfkonzentration 10 bis 95 Vol.-%, besonders bevorzugt 40 bis 90 Gew.-%, ganz besonders bevorzugt 50 bis 90 Gew. %.

Insbesondere bei Verwendung eines Drehrohrreaktors ist darauf zu achten, dass überall gleiche Temperaturen herrschen, d. h. keine "Kühlzonen" existieren, in denen der Wasserdampf kondensieren könnte. Durch den kondensierten Wasserdampf kann es zu einer Verklumpung der Fällungskieselsäuren kommen. Die besonderen Bedingungen bei der erfindungsgemäßen Temperung stellen daher auch sicher, das eine bereits vor der Temperung vermahlene Fällungskieselsäure nach der Temperung nicht noch einmal vermahlen werden muss, d. h. keine Verbackungen oder Verklumpungen gebildet werden, die durch eine Vermahlung nach der Temperung wieder entfernt werden müssten.

Bevorzugt wird ein Wirbelbett- oder Fließbettreaktor verwendet. Unter einem Wirbelbett ist Folgendes zu verstehen:

> Wenn auf waagerechten, perforierten Böden lagerndes feinkörniges Schüttgut von unten von Gasen durchströmt wird, stellt sich unter bestimmten Strömungsbedingungen ein Zustand ein, der dem einer kochenden Flüssigkeit ähnelt; die Schicht wirft Blasen auf; die Teilchen des Schüttgutes befinden sich innerhalb der Schicht in einer

ständigen, wirbelnden Auf- und Abbewegung und bleiben so gewissermaßen in der Schwebe. Man spricht deshalb auch von Schwebebett, Wirbelbett, Fließbett sowie von Fluidisieren. Die damit verbundene große Oberfläche des Wirbelgutes erleichtert auch das Trocknen und Tempern von Festkörpern.

Es ist wichtig, dass während der Temperung alle Fällungskieselsäurepartikel der gleichen Temperatur und dem gleichen Prozessgas ausgesetzt sind. Die Temperaturunterschiede zwischen den heißesten und kältesten Stellen sollen möglichst klein sein. Deshalb darf auch die Temperatur der Filterkerzen nicht unter der Produkttemperatur liegen.

Ganz besonders bevorzugt erfolgt die Temperung in Schritt 5 des erfindungsgemäßen Verfahrens gemäß den nachfolgenden Teilschritten 5a) bis 5e):

5a. Einfüllen der Fällungskieselsäure in den Wirbelbettreaktor

5b. Vorheizen des Reaktors auf 300 bis 800 °C, wobei gleichzeitig der Reaktor von einem Inertgas und/oder Stickstoff-Luft-Gemisch so durchströmt wird, das sich eine Fluidierungsgeschwindigkeit von 0,02 bis 0,06 m/s einstellt.

5c. Einspeisung eines Gasgemisches I aus Wasserdampf und einem Inertgas, z. B. Stickstoff, oder eines Gasgemisches II aus Wasserdampf, einem Inertgas und Luft bei 300 bis 800 °C für die Dauer von 0,25 bis 6 h, wobei das Gasgemisch den Reaktor mit einer Fluidisierungsgeschwindigkeit von 0,02 bis 0,06 m/s durchströmt und die Gasgemische I und II eine Wasserdampfkonzentration von 10 bis 95 Vol.-% und im Falle des Gasgemisches II einen Sauerstoffgehalt von 0,01 bis 21 Vol.-% aufweisen.

5d. Unterbrechung der Dampfzugabe und Austreiben des Dampfes durch ein Inertgas, z.B. Stickstoff, und/oder ein Inertgas-Luft-Gemisch bei 300 bis 800 °C, wobei das Gas bzw. Gasgemisch den Reaktor mit einer Fluidisierungsgeschwindigkeit von 0,02 bis 0,06 m/s durchströmt und im Falle der Verwendung des Inertgas-Luft-Gemisches dieses einen Sauerstoffgehalt von 0,01 bis 21 Vol.-% aufweist.

5e. Abkühlung der getemperten Fällungskieselsäure auf Raumtemperatur in einer trockenen Prozeßatmosphäre, wobei bei Verwendung eines Inertgas-Luft-Gemisches dieses einen Sauerstoffgehalt von 0,01 bis 21 Vol.-% aufweist.

Dabei wird nach dem Einfüllen der Fällungskieselsäure in den Wirbelbettreaktor (Teilschritt 5a)) der Reaktor im Teilschritt 5b) auf eine Betriebstemperatur von 300 bis 800 °C, bevorzugt von 350 bis 690 °C und besonders bevorzugt von 400 bis 650 °C aufgeheizt. Während des Aufheizvorgangs wird der Reaktor von einem Inertgas, bevorzugt Stickstoff und/oder einem Gemisch aus einem Inertgas und trockener Luft so durchströmt, dass sich eine Fluidisierungsgeschwindigkeit von 0,02 bis 0,06 m/s einstellt.

Nach Erreichen der Betriebstemperatur wird in Teilschritt 5c) ein Gasgemisch I aus Wasserdampf und einem Inertgas, bevorzugt Stickstoff, oder ein Gasgemisch II aus Wasserdampf, einem Inertgas und Luft für die Dauer von 0,25 bis 6 h, bevorzugt 0,5 bis 5 h, besonders bevorzugt 1 bis 4 h, ganz besonders bevorzugt 2 bis 4 h durch den Reaktor geleitet. Die Fluidisierungsgeschwindigkeit des Gasgemischs beträgt 0,02 bis 0,06 m/s. Die Gasgemische I und II weisen eine Wasserdampfkonzentration von 10 bis 95 Vol.-%, bevorzugt 40 bis 90 Gew.-%, ganz besonders bevorzugt 50 bis 90 Gew. % und im Falle des Gasgemisches II einen Sauerstoffgehalt von 0,01 bis 21 Vol.-% auf.

Das nach Schritt 5 oder Schritt 6 erhaltene Material wird auf pH = 3 - 5, ausgenommen pH 4-5, angesäuert. Dies erfolgt bevorzugt mit einem gasförmigen Säurungsmittel, besonders bevorzugt mit gasförmiger Salzsäure und/oder HBr und/oder Stickoxiden und/oder verdampftem $SO_3$ und/oder verdampftem $SOCl_2$.

In einer ersten Ausführungsform des erfindungsgemäßen Verfahrens erfolgt die Ansäuerung durch in Kontakt bringen von zumindest einem Säuerungsmittel mit der nach Schritt 5 oder 6 erhaltenen Fällungskieselsäure.

In einer zweiten Ausführungsform erfolgt die Ansäuerung über das Mischen einer gesäuerten mit einer ungesäuerten Fraktion der erfindungsgemäßen Fällungskieselsäure. In dieser Ausführungsform wird das nach Schritt 5 oder 6 erhaltene Material in Fraktion A und Fraktion B aufgeteilt. Fraktion A wird durch in Kontakt bringen mit dem Säuerungsmittel, bevorzugt gasförmiger HCl angesäuert. Nach dem Ansäuern wird Fraktion A optional mit einem Inertgas, besonders bevorzugt Stickstoff gespült. Fraktion A wird bevorzugt auf einen pH-Wert von 2 - 4, ausgenommen pH-Wert von 4, angesäuert. Zu der angesäuerten Fraktion A wird nun soviel Material von Fraktion B zugegeben, bis sich ein pH-Wert von 3 - 5, ausgenommen ein pH-Wert von 4-5, ergibt. Der Vorgang des Ansäuerns und Mischens kann solange wiederholt werden, bis man den gewünschten pH-Wert erreicht hat.

Unabhängig davon, ob die Ansäuerung nach Ausführungsform 1 oder 2 erfolgt, kann nach erfolgter Ansäuerung

eine Spülung mit einem Inertgas, bevorzugt Stickstoff erfolgen um Reste des Säuerungsmittels auf des Fällungskieselsäureoberfläche zu entfernen.

Die erfindungsgemäßen Fällungskieselsäuren können in Dichtungsmassen, insbesondere in Siliconkautschuk bzw. Silicondichtungsmassen und besonders bevorzugt in RTV-1K-Dichtungsmassen verwendet werden. Die Anwendung ist möglich in verschiedenen Vernetzungssystemen, z. B. acetoxy-vernetzend, alcoxy-vernetzend und oxim-vernetzend. Diese Systeme finden Anwendung z.B. in der Bauindustrie als Fugendichtungsmassen, in der Automobilindustrie als Kleb- und Dichtstoff und als Beschichtungsmassen für z.B. Textilgewebe.

Die Reaktionsbedingungen und die physikalisch/chemischen Daten der erfindungsgemäßen Fällungskieselsäuren werden mit den folgenden Methoden bestimmt:

## Bestimmung des Feststoffgehalts von Filterkuchen

Nach dieser Methode wird der Feststoffgehalt von Filterkuchen durch Entfernen der flüchtigen Anteile bei 105 °C bestimmt.

Dazu werden in eine trockene, tarierte Porzellanschale (Durchmesser 20 cm) 100,00 g des Filterkuchens eingewogen (Einwaage E). Gegebenenfalls wird der Filterkuchen mit einem Spatel zerkleinert, um lockere Brocken von maximal 1 $cm^3$ zu erhalten. Die Probe wird bei 105 ± 2 °C in einem Trockenschrank bis zur Gewichtskonstanz getrocknet. Anschließend wird die Probe in einem Exsikkatorschrank mit Kieselgel als Trocknungsmittel auf Raumtemperatur abgekühlt. Die Auswaage A wird gravimetrisch bestimmt.

Man bestimmt den Feststoffgehalt (FG) in % gemäß

$$FG = A / E * 100 \%,$$

mit A = Auswaage in g und E = Einwaage in g.

## Bestimmung des Feststoffgehalts von Fällsuspensionen

Der Feststoffgehalt der Fällsuspension wird gravimetrisch nach Filtration der Probe bestimmt.

100,0 ml der homogenisierten Fällsuspension ($V_{Suspension}$) werden bei Raumtemperatur mit Hilfe eines Messzylinders abgemessen. Die Probe wird über einen Rundfilter (TYP 572, Fa. Schleicher & Schuell) in einer Porzellannutsche abgenutscht, aber nicht trockengesaugt, um Rissbildung des Filterkuchens zu verhindern. Anschließend wäscht man den Filterkuchen mit 100,0 ml destillierten Wasser. Der ausgewaschene Filterkuchen wird in eine tarierte Porzellanschale überführt und bei 105 ± 2 °C in einem Trockenschrank bis zur Gewichtskonstanz getrocknet. Nach Abkühlung auf Raumtemperatur wird das Gewicht der getrockneten Fällungskieselsäure ($m_{Probe}$) ermittelt.

Der Feststoffgehalt bestimmt sich gemäß:

$$\text{Feststoffgehalt in g/l} = (m_{Probe} \text{ in g}) / (V_{Suspension} \text{ in l}).$$

## Bestimmung des Feststoffgehalts von Fällungskieselsäurespeise

Die Fällungskieselsäurespeise wird im IR-Trockner bis zur Gewichtskonstanz getrocknet. Der Trocknungsverlust besteht überwiegend aus Wasserfeuchtigkeit.

In eine tarierte Aluminiumschale werden 2,0 g Fällungskieselsäurespeise eingefüllt und der Deckel der IR-Trockeneinheit (Fa. Mettler, Typ LP 16) geschlossen. Nach Drücken der Starttaste beginnt die Trocknung der Suspension bei 105 °C, die automatisch beendet wird, wenn die Gewichtsabnahme pro Zeiteinheit den Wert von 2 mg/(120 s) unterschreitet.

Die Gewichtsabnahme in % wird vom Gerät bei Anwahl des 0-100 %-Modus direkt angezeigt. Der Feststoffgehalt ergibt sich gemäß

$$\text{Feststoffgehalt in \%} = 100 \% - \text{Gewichtsabnahme in \%}.$$

## Bestimmung des pH-Wertes

Die Bestimmung des pH-Wertes der Fällungskieselsäure erfolgt als 5%ige wässrige Suspension bei Raumtemperatur in Anlehnung DIN EN ISO 787-9. Gegenüber den Vorgaben dieser Norm wurden die Einwaagen verändert (5,00 g Fällungskieselsäure auf 100 ml entionisiertes Wasser).

**Bestimmung der elektrischen Leitfähigkeit**

Die Bestimmung der elektrischen Leitfähigkeit von Fällungskieselsäure wird als 4%ige wässrige Suspension bei Raumtemperatur in Anlehnung an DIN EN ISO 787-14 durchgeführt. Gegenüber den Vorgaben dieser Norm wurden die Einwaagen verändert (4,00 g Fällungskieselsäure auf 100 ml entionisiertes Wasser).

**Bestimmung der Feuchte oder des Trockungsverlustes**

Die Feuchte von Fällungskieselsäure wird gemäß ISO 787-2 nach 2-stündiger Trocknung in einem Umlufttrokkenschrank bei 105 °C bestimmt. Dieser Trocknungsverlust besteht überwiegend aus Wasserfeuchtigkeit.

**Bestimmung des Glühverlustes**

Nach dieser Methode wird der Gewichtsverlust von Fällungskieselsäure in Anlehnung an DIN EN ISO 3262-1 bei 1000°C bestimmt. Bei dieser Temperatur entweicht physikalisch und chemisch gebundenes Wasser sowie andere flüchtige Bestandteile. Die Feuchte (TV) der untersuchten Probe wird nach der zuvor beschriebenen Methode "Bestimmung der Feuchte bzw. des Trockenverlusts" in Anlehnung an DIN EN ISO 787-2 ermittelt.

0.5 g der pulverförmigen, kugelförmigen oder granulären Fällungskieselsäure werden auf 0.1 mg genau in einen vorgeglühten, tarierten Porzellantiegel eingewogen (Einwaage E). Die Probe wird 2 h bei 1000 ± 50 °C in einem Muffelofen erhitzt. Anschließend wird der Porzellantiegel in einem Exsikkatorschrank mit Kieselgel als Trocknungsmittel auf Raumtemperatur abgekühlt. Die Auswaage A wird gravimetrisch bestimmt.

Man erhält den Glühverlust (DIN) GV in % gemäß

$$GV = (1 - A / F) * 100.$$

F bedeutet die korrigierte Einwaage bezogen auf getrocknete Substanz in g und errechnet sich nach

$$F = E * (1 - TV / 100).$$

In den Berechnungen bedeuten A = Auswaage in g, E = Einwaage in g und TV = Trockenverlust in %.

**Bestimmung der BET-Oberfläche**

Die spezifische Stickstoff-Oberfläche (im folgenden BET-Oberfläche genannt) der pulverförmigen, kugelförmigen oder granulären Fällungskieselsäure wird in Anlehnung an ISO 5794-1/Annex D mit dem Gerät TRISTAR 3000 ( Fa. Micromeritics) nach der Multipointbestimmung gemäß DIN-ISO 9277 ermittelt.

**Bestimmung der CTAB-Oberfläche**

Die Methode beruht auf der Adsorption von CTAB (N-Hexadecyl-N,N,N-trimethylammoniumbromid) an der "äußerten" Oberfläche der Fällungskieselsäure in Anlehnung an die ASTM 3765, bzw. NFT 45-007 (Kapitel 5.12.1.3).

Die Adsorption von CTAB erfolgt in wässriger Lösung unter Rühren und Ultraschallbehandlung. Überschüssiges, nicht adsorbiertes CTAB wird durch Rücktitration mit NDSS (Dioctylnatriumsulfosuccinat-Lösung, "Aerosol OT"-Lösung) mit einem Titroprozessor ermittelt, wobei der Endpunkt durch das Maximum der Trübung der Lösung gegeben ist und mit einer Phototrode bestimmt wird. Die Temperatur während aller durchgeführten Operationen beträgt 23 - 25 °C um das Auskristallisieren von CTAB zu verhindern. Der Rücktitration liegt die folgende Reaktionsgleichung zu Grunde:

$$(C_{20}H_{37}O_4)SO_3Na + BrN(CH_3)_3(C_{16}H_{33}) \Rightarrow (C_{20}H_{37}O_4)SO_3N(CH_3)_3(C_{16}H_{33}) + NaBr$$

NDSS CTAB

Geräte

Titroprozessor METTLER Toledo Typ DL 55 und Titroprozessor METTLER Toledo Typ DL 70, jeweils ausgerüstet mit: pH-Elektrode, Fabrikat Mettler, Typ DG 111 und Phototrode, Fabrikat Mettler, Typ DP 550
Titrierbecher 100 ml aus Polypropylen
Titrierglasgefäß, 150 ml mit Deckel
Druckfiltrationsgerät, 100 ml Inhalt
Membranfilter aus Cellulosenitrat, Porengröße 0,1 μm, 47 mm ∅, z. B. Whatman (Best. Nr. 7181-004)

Reagenzien

Die Lösungen von CTAB ($C_{CTAB}$ = 0,015 mol/l in entionisiertem Wasser) und NDSS (Konzentration = 0,00423 mol/l in entionisiertem Wasser) werden gebrauchsfertig bezogen (Fa. Bernd Kraft GmbH, 47167 Duisburg: Bestell-Nr. 6056.4700 CTAB-Lösung der Konzentration 0,015 mol/l; Bestell-Nr. 6057.4700 NDSS-Lösung 0,00423 mol/l), bei 25 °C aufbewahrt und innerhalb von einem Monat aufgebraucht.

Durchführung

**1. Blindtitration**

Der Verbrauch an NDSS-Lösung zur Titration von 5 ml CTAB-Lösung ist 1 x täglich vor jeder Meßreihe zu prüfen. Dazu wird die Phototrode vor Beginn der Titration auf 1000 ± 20 mV eingestellt (entsprechend einer Transparenz von 100 %).

Es werden genau 5.00 ml CTAB-Lösung in einen Titrierbecher pipettiert und man fügt 50,0 ml entionisiertes Wasser hinzu. Unter Rühren erfolgt die Titration mit NDSS-Lösung nach der dem Fachmann geläufigen Meßmethode mit dem Titroprozessor DL 55 bis zur max. Trübung der Lösung. Man bestimmt den Verbrauch $V_A$ an NDSS-Lösung in ml. Jede Titration ist als Dreifachbestimmung auszuführen.

**2. Adsorption**

10,0 g der pulverförmigen, kugelförmigen oder granulierten Fällungskieselsäure mit einem Feuchtegehalt von 5 ± 2 % (gegebenenfalls wird der Feuchtegehalt durch Trocknen bei 105 °C im Trockenschrank oder gleichmäßiges Befeuchten eingestellt) werden mit einer Mühle (Fa. Krups, Model KM 75, Artikel Nr. 2030-70) 30 Sekunden lang zerkleinert. Genau 500,0 mg der zerkleinerten Probe (Einwaage E) werden in ein 150 ml Titriergefäß mit Magnetrührstäbchen überführt und es werden genau 100,0 ml CTAB-Lösung ($T_1$) zudosiert. Das Titriergefäß wird mit einem Deckel verschlossen und mit einem Ultra Turrax T 25 Rührer (Rührwelle KV-18G, 18 mm Durchmesser) bei 18 000 U/min maximal 1 min lang bis zur vollständigen Benetzung gerührt. Das Titriergefäß wird an den Titroprozessor DL 70 geschraubt und der pH-Wert der Suspension wird mit KOH (0,1 mol/l) auf einen Wert von 9 ± 0,05 eingestellt.

Es erfolgt eine 4-minütige Beschallung der Suspension in dem Titriergefäß in einem Ultraschallbad (Fa. Bandelin, Sonorex RK 106 S, 35 kHz, 100 W Effektiv bzw. 200 W Spitzenleistung) bei 25 °C. Anschließend erfolgt eine umgehende Druckfiltration durch einen Membranfilter bei einem Stickstoffdruck von 1,2 bar. Der Vorlauf von 5 ml wird verworfen.

**3. Titration**

5,00 ml des übrigen Filtrats werden in einen 100 ml Titrierbecher pipettiert und mit entionisiertem Wasser auf 50,00 ml aufgefüllt. Der Titrierbecher wird an den Titroprozessor DL 55 geschraubt und unter Rühren erfolgt die Titration mit NDSS-Lösung bis zur maximalen Trübung. Man bestimmt den Verbrauch $V_B$ an NDSS-Lösung in ml. Jede Titration ist als Dreifachbestimmung auszuführen.

Berechnung

$$CTAB(nicht\ feuchtekorrigiert) = \frac{V_A - V_B}{V_A} * \frac{C_{CTAB} * M_{CTAB} * T_1 * P}{E}$$

$V_A$ = Verbrauch an NDSS-Lösung in ml bei der Titration der Blindprobe

$V_B$ = Verbrauch an NDSS-Lösung in ml bei Verwendung des Filtrats

$C_{CTAB}$ = Konzentration der CTAB-Lösung in mol/l

$M_{CTAB}$ = Molmasse von CTAB = 364,46 g/mol

$T_1$ = Zugegebene Menge an CTAB-Lösung in l

P = Platzbedarf von CTAB = 578,435 $m^2$/g

E = Einwaage an Fällungskieselsäure

Die CTAB-Oberfläche wird auf die wasserfreie Fällungskieselsäure bezogen, weshalb die folgende Korrektur durchgeführt wird.

$$CTAB = \frac{CTAB(nicht\ feuchtekorrigiert)\ in\ m^2/g\ *\ 100\,\%}{100\,\% - \ Feuchte\ in\,\%}$$

Die Feuchte der Fällungskieselsäure wird gemäß der beschriebenen Methode "Bestimmung der Feuchte" ermittelt.

**Bestimmung der DBP-Aufnahme**

Die DBP-Aufnahme (DBP-Zahl), die ein Maß für die Saugfähigkeit der Fällungskieselsäure ist, wird in Anlehnung an die Norm DIN 53601 wie folgt bestimmt:

> 12,50 g pulverförmige oder kugelförmige Fällungskieselsäure mit 0 - 10 % Feuchtegehalt (gegebenenfalls wird der Feuchtegehalt durch Trocknen bei 105 °C im Trockenschrank eingestellt) werden in die Kneterkammer (Artikel Nummer 279061) des Brabender-Absorptometer "E" gegeben (ohne Dämpfung des Ausgangsfilters des Drehmomentaufnehmers). Im Falle von Granulaten wird die Siebfraktion von 1 bis 3,15 mm (Edelstahlsiebe der Fa. Retsch) verwendet (durch sanftes Drücken der Granulate mit einem Kunststoffspatel durch das Sieb mit 3,15 mm Porenweite). Unter ständigem Mischen (Umlaufgeschwindigkeit der Kneterschaufeln 125 U/min) tropft man bei Raumtemperatur durch den "Dosimaten Brabender T 90/50" Dibutylphthalat mit einer Geschwindigkeit von 4 ml/min in die Mischung. Das Einmischen erfolgt mit nur geringem Kraftbedarf und wird anhand der Digitalanzeige verfolgt. Gegen Ende der Bestimmung wird das Gemisch pastös, was mittels eines steilen Anstieges des Kraftbedarfs angezeigt wird. Bei einer Anzeige von 600 digits (Drehmoment von 0,6 Nm) wird durch einen elektrischen Kontakt sowohl der Kneter als auch die DBP-Dosierung abgeschaltet. Der Synchronmotor für die DBP-Zufuhr ist mit einem digitalen Zählwerk gekoppelt, so dass der Verbrauch an DBP in ml abgelesen werden kann.

Die DBP-Aufnahme wird in g/(100 g) angegeben und anhand der folgenden Formel berechnet:

$$DBP = \frac{V * D * 100}{E} * \frac{g}{100\ g} + K$$

mit

DBP = DBP-Aufnahme in g/(100 g)

*V* = Verbrauch an DBP in ml

*D* = Dichte von DBP in g/ml (1,047 g/ml bei 20 °C)

*E* = Einwaage an Fällungskieselsäure in g

*K* = Korrekturwert gemäß Feuchtekorrekturtabelle in g/100 g)

Die DBP-Aufnahme ist für die wasserfreie, getrocknete Fällungskieselsäure definiert. Bei Verwendung von feuchten Fällungskieselsäuren ist der Korrekturwert K-für die Berechnung der DBP-Aufnahme zu berücksichtigen. Dieser Wert kann anhand der folgenden Korrekturtabelle ermittelt werden, z. B. würde ein Wassergehalt der Fällungskieselsäure von 5,8 % einen Zuschlag von 33 g/(100 g) für die DBP-Aufnahme bedeuten. Die Feuchte der Fällungskieselsäure wird gemäß der Methode "Bestimmung der Feuchte bzw. des Trocknungsverlusts" ermittelt.

Feuchtekorrekturtabelle für Dibutylphthalataufnahme (wasserfrei)

| % Feuchte | % Feuchte<br>,0 | ,2 | ,4 | ,6 | ,8 |
|---|---|---|---|---|---|
| 0 | 0 | 2 | 4 | 5 | 7 |
| 1 | 9 | 10 | 12 | 13 | 15 |
| 2 | 16 | 18 | 19 | 20 | 22 |
| 3 | 23 | 24 | 26 | 27 | 28 |
| 4 | 28 | 29 | 29 | 30 | 31 |
| 5 | 31 | 32 | 32 | 33 | 33 |
| 6 | 34 | 34 | 35 | 35 | 36 |
| 7 | 36 | 37 | 38 | 38 | 39 |
| 8 | 39 | 40 | 40 | 41 | 41 |
| 9 | 42 | 43 | 43 | 44 | 44 |
| 10 | 45 | 45 | 46 | 46 | 47 |

## IR-Bestimmung

Mittels IR-Spektroskopie können die unterschiedlichen Arten von SiOH-Gruppen (isoliert, verbrückt, + $H_2O$) ermittelt werden. Zur Bestimmung der Intensitäten der verschiedenen Silanolgruppen werden die Fällungskieselsäuren als Pulverschichten vermessen. Die Extinktionswerte der unterschiedlichen Silanolgruppen werden durch den Extinktionswert der SiO-Kombinationsschwingungsbande bei 1870 $cm^{-1}$ dividiert (normiert).

Die IR-spektroskopische Bestimmung erfolgt mittels eines FT-IR-Spektrometers IFS 85 der Fa. Bruker. Für die Messung werden ein NaCl-Monokristallfenster (rund d=25 mm, h=5 mm) der Fa. K.Korth, Kiel, ein Distanzhalter 0,5 mm aus Teflon und eine Halterung für die Fenster verwendet. Der Distanzhalter wird auf ein sauberes und poliertes NaCl-Monokristallfenster gelegt. Das Probenmaterial wird zwischen den Distanzhalter aufgestäubt und mit einem weiteren sauberen und poliertem NaCl-Monokristallfenster abgedeckt, wobei keine Luftbläschen eingeschlossen sein dürfen. Die beiden NaCl-Monokristallfenster mit der Pulverschicht werden in die Probenhalterung eingespannt. Die Probenhalterung wird in den IR-Strahlengang gebracht und der Probenraum geschlossen. Der Probenraum wird vor der Messung mit von Wasserdampf und Kohlendioxid gereinigter Luft gespült. Im Justiermodus wird ein "Align" durchgeführt und die Messung gestartet.

Die Messung wird mit folgenden Parametern durchgeführt:

| | |
|---|---|
| Auflösung: | 2 $cm^{-1}$ |
| Scannergeschwindigkeit: | 6; 10,51 Hz |
| Messintervall: | 4500 $cm^{-1}$ bis 100 $cm^{-1}$ |
| Apodizierungsfunktion: | Triangular |
| Anzahl der Scans | 128 |

Das Spektrum wird im Wellenzahlenbereich von 4000 bis 1400 $cm^{-1}$ in kontinuierlichen Wellenzahlen ausgedruckt.

Das Extinktionsverhältnis $SiOH_{isoliert}$ wird wie folgt ermittelt (Abbildung 4):

Zunächst werden zwei Basislinien festgelegt. Dazu werden zwei Tangenten an die Absorptionskurve angelegt. Die erste Tangente (1. Basislinie) berührt die Absorptionskurve zum einen im Bereich von 4000 $cm^{-1}$ bis 3800 $cm^{-1}$ sowie zum anderen im Bereich von 3000 $cm^{-1}$ bis 2100 $cm^{-1}$. Dabei ist darauf zu achten, das die Tangente die Absorptionskurve weder im Bereich von 4000 $cm^{-1}$ bis 3800 $cm^{-1}$ noch im Bereich von 3000 $cm^{-1}$ bis 2100$cm^{-1}$ schneidet. Die zweite Tangente (2. Basislinie) berührt die Absorptionskurve zum einen im Bereich von 2200 $cm^{-1}$ bis 2000 $cm^{-1}$ sowie zum anderen im Bereich von 1850 $cm^{-1}$ bis 1650 $cm^{-1}$. Dabei ist darauf zu achten, das die Tangente die Absorptionskurve weder im Bereich von 2200 $cm^{-1}$ bis 2000 $cm^{-1}$ noch im Bereich von 1850 $cm^{-1}$ bis 1650$cm^{-1}$ schneidet.

Nach Festlegung der Basislinien wird vom Maximum der relevanten Banden (3750 und 1870 $cm^{-1}$) das Lot auf die jeweilige Basislinie gefällt und die jeweiligen Höhen vom Maximum bis zur Basislinie in mm ausgemessen. Es wird folgender Quotient gebildet:

$$Extinktionsverhältnis\,(SiOH_{isoliert}) = \frac{Höhe\ vom\ Maximum\ zur\ Basislinie\ in\ mm\ bei\ 3750\ cm^{-1}}{Höhe\ vom\ Maximum\ zur\ Basislinie\ in\ mm\ bei\ 1870\ cm^{-1}}$$

Von jeder Probe werden sechs IR-Spektren aufgenommen, wobei jeweils mit neuem Probenmaterial gemessen wird. Jedes IR-Spektrum wird nach dem zuvor beschriebene Prozedere jeweils fünf mal ausgewertet. Das Exktinktionsverhältnis ($SiOH_{isoliert}$) wird schließlich als Mittelwert aller Auswertungen angegeben.

**Bestimmung des Kontaktwinkels**

Der Kontaktwinkel wird wie in W.T. Yen, R.S. Chahal, T. Salman, Can. Met. Quart., Vol. 12, Nr. 3, 1973 beschrieben bestimmt.

**Bestimmung der Silanolgruppendichte**

Zunächst wird die Feuchte der Fällungskieselsäureprobe gemäß der "Bestimmung der Feuchte oder des Trocknungsverlustes" ermittelt. Danach werden 2 - 4 g der Probe (auf 1 mg genau zu bestimmen) in eine druckdichte Glasapparatur (Glaskolben mit Tropftrichter) mit angeschlossener Druckmessung überführt. Dort wird sie 1 h bei 120° im Vakuum (< 1 hPa) getrocknet. Bei Raumtemperatur werden dann aus einem Tropftrichter ca. 40 ml einer entgasten 2%igen Lösung von $LiAlH_4$ in Diglyme zugetropft. Evtl. wird weitere Lösung zugetropft, bis keine weitere Druckzunahme zu beobachten ist. Die Druckzunahme durch den bei der Reaktion des $LiAlH_4$ mit den Silanolgruppen der Fällungskieselsäure entstehenden Wasserstoff wird über die Druckmessung (bei durch vor der Messung erfolgter Kalibrierung der Apparatur bekanntem Volumen) auf ≤ 1 hPa genau bestimmt. Aus der Druckzunahme kann über die Allgemeine Gasgleichung auf die Silanolgruppenkonzentration der Fällungskieselsäure zurückgerechnet werden, wobei die Feuchte der Fällungskieselsäure zu berücksichtigen ist. Der Einfluss des Dampfdrucks des Lösungsmittels ist dabei entsprechend zu korrigieren. Aus der Silanolgruppendichte errechnet sich wie folgt:

$$Silano\ lg\ ruppendich\ te = \frac{Silano\ lg\ ruppenkonz\ entration}{BET - Oberfläche}$$

**Bestimmung der Partikelgrößenverteilung mittels Laserbeugung**

Die Bestimmung der Partikelverteilung erfolgt nach dem Prinzip der Laserbeugung auf einem Laserdiffraktometer (Fa. Horiba, LA-920).

Zunächst wird die Fällungskieselsäureprobe in 100 ml Wasser ohne Zusatz von Dispergieradditiven in einem 150 ml Becherglas (Durchmesser: 6 cm) so dispergiert, das eine Dispersion mit einem Gewichtsanteil von 1 Gew.-% $SiO_2$ entsteht. Diese Dispersion wird danach mit einem Ultraschallfinger (Dr. Hielscher UP400s, Sonotrode H7) über einen Zeitraum von 5 min intensiv (300 W, nicht gepulst) dispergiert. Dafür ist der Ultraschallfinger so anzubringen, dass dessen unteres Ende bis ca. 1 cm über dem Boden des Becherglases eintaucht. Unmittelbar im Anschluss an die Dispergierung wird von einer Teilprobe der mit Ultraschall beanspruchten Dispersion mit dem Laserdiffraktometer (Horiba LA-920) die Partikelgrößenverteilung bestimmt. Für die Auswertung mit der mitgelieferten Standardsoftware des Horiba LA-920 ist ein relativer Brechungsindex von 1,09 zu wählen.

Alle Messungen erfolgen bei Raumtemperatur. Die Partikelgrößenverteilung sowie die relevanten Größen wie z. B. die Partikelgröße $d_{90}$ werden vom Gerät automatisch berechnet und grafisch dargestellt. Es sind die Hinweise in der Bedienungsanleitung zu beachten.

**Bestimmung der modifizierten Stampfdichte**

Bei der "herkömmlichen" Stampfdichtebestimmung nach DIN EN ISO 787-11 kann das Messergebnis dadurch verfälscht werden, das die Fällungskieselsäure bereits eine Vorverdichtung z. B. beim Abpacken erfahren hat. Um dies auszuschließen, wird für die erfindungsgemäßen Fällungskieselsäuren eine "modifizierte Stampfdichte" bestimmt.

Eine mit einem Rundfilter (z.B. Typ 598, Fa. Schleicher + Schüll) versehene Porzellannutsche (Nenngröße 110, Durchmesser = 12 cm, Höhe = 5,5 cm) wird bis ca. 1 cm unter den oberen Rand locker mit Fällungskieselsäure gefüllt und mit elastischer Folie (Parafilm®) abgedeckt. Die Form und Ausmaße der elastischen Folie sind so zu wählen, dass diese möglichst vollständig mit dem Rand der Porzellannutsche abschließt. Die Nutsche wird auf eine Saugflasche gesetzt und anschließend wird für die Dauer von 5 min ein Vakuum von -0,7 bar angelegt. Dabei wird die Fällungskieselsäure durch die angesaugte Folie gleichmäßig kompaktiert. Danach wird vorsichtig belüftet und die entstandene Fällungskieselsäureplatte aus der Nutsche durch Stürzen in eine Porzellanschale entfernt.

Das leicht vorzerkleinerte Material wird über eine Zentrifugalmühle (ZM 1, Fa. Retsch, 0,5 mm Siebeinsatz, Geschwindigkeitsstufe 1, ohne Zyklon, ohne inneren Trichtereinsatz) mit innerer Auffangschale gleichmäßig (die Fällungskieselsäure (Edukt) wird langsam - Spatel für Spatel - in die Mühlenaufgabe gegeben, die innere Produkt-Auffangschale soll nie ganz voll werden) redispergiert (im Sinne eines Fällungskieselsäure/Luft Aerosols). Dabei darf die Stromaufnahme der Mühle den Wert von 3 Ampere nicht überschreiten. Bei diesem Vorgang handelt es sich weniger um eine klassische Vermahlung, als um ein definiertes Auflockern der Fällungskieselsäurestruktur (von z. B. luftstrahlvermahlenen Fällungskieselsäuren), da der Energieeintrag hier wesentlich schwächer ist als bei einer Strahlvermahlung.

5 g des so erhaltenen Materials werden in den 250 ml-Messzylinder des Stampfvolumeters (Typ STAV 2003, Fa. Engelsmann) auf 0,1 g genau eingewogen. In Anlehnung an DIN ISO 787-11 wird nach 1250maligem Aufstampfen das resultierende Volumen der Fällungskieselsäure in ml an der Skala abgelesen.

$$\textit{Modifizierte Stampfdichte in}\,[g/l] = \frac{5\,g}{\textit{Stampfvolumen in}\,[ml]} \times \frac{1000\,ml}{1\,l}$$

Die folgenden Beispiele sollen die Erfindung näher erläutern, ohne ihren Umfang zu beschränken.

Das an verschiedenen Stellen, in den nachfolgenden Vorschriften der Beispiele eingesetzte Wasserglas und die Schwefelsäure wird wie folgt charakterisiert:

Wasserglas: Dichte 1,348 kg/l, 27,0 Gew.-% $SiO_2$, 8,05 Gew.-% $Na_2O$

Schwefelsäure: Dichte 1,83 kg/l, 94 Gew.-%

**Beispiel 1**

In einem 2 $m^3$ Fällbehälter (Durchmesser 160 cm) mit Schrägboden, MIG-Schrägblattrührsystem und Ekato-Fluid-Scherturbine werden 1680 1 entionisiertes Wasser vorgelegt und auf 92 °C erhitzt. Nach Erreichen der Temperatur werden für die Dauer von 100 min Wasserglas mit einer Dosierrate von 3,93 kg/min und Schwefelsäure mit einer Dosierrate von 0,526 kg/min unter Rühren zudosiert. Die Dosierrate der Schwefelsäure ist evtl. so zu korrigieren, dass während der gesamten Fälldauer ein pH-Wert von 8,5 eingehalten wird. Danach wird die Wasserglasdosierung abgeschaltet und bei gleicher Dosierrate der Schwefelsäure die Fällsuspension auf pH 3 angesäuert. Die Fällsuspension weist dann einen Feststoffgehalt von 54 g/l auf.

Die erhaltene Suspension wird mit einer Membranfilterpresse filtriert und der Filterkuchen mit entionisiertem Wasser gewaschen, bis im Waschwasser eine Leitfähigkeit von < 1 mS/cm festzustellen ist. Der Filterkuchen liegt dann mit einem Feststoffgehalt von < 20 % vor.

Vor der Trocknung mittels Sprühtrockner wird der Filterkuchen mit entionisiertem Wasser auf einen Feststoffgehalt von 8 - 13 % redispergiert, wobei darauf zu achten ist, dass er dabei keinen starken Scherkräften ausgesetzt wird. Die Eindosierung des verflüssigten Filterkuchens in den Sprühtrockner erfolgt so, dass die am Trockneraustritt gemessene Temperatur ca. 150 °C beträgt.

Das sprühgetrocknete Material wird über eine mechanische Schlägermühle auf eine mittlere Partikelgröße von 10-12 μm vorvermahlen. Nach dieser Vorvermahlung wird das Material auf einer Wasserdampf-betriebenen Fließbettgegenstrahlmühle gemäß Abbildungen 1, 2a und 3a bei 38 bar Überdruck feinstvermahlen. Details zum verwendeten

Mahlsystem (Mühle) und zum verwendeten Mahlverfahren können der obigen Beschreibung sowie den Abbildungen 1, 2a und 3a entnommen werden.

Zur Vorbereitung der eigentlichen Vermahlung mit überhitztem Wasserdampf eine Fließbettgegenstrahlmühle gemäß Abbildung 1 mit integriertem dynamischen Windsichter gemäß Abbildungen 2a und 3a zunächst über die zwei Heizdüsen 5a (wovon in Abbildung 1 nur eine dargestellt ist), welche mit 10 bar und 160°C heißer Druckluft beaufschlagt werden, bis zu einer Mühlenaustrittstemperatur von ca. 105°C aufgeheizt.

Der Mühle ist zur Abscheidung des Mahlgutes eine Filteranlage nachgeschaltet (nicht in Abbildung 1 gezeigt), dessen Filtergehäuse im unteren Drittel indirekt über angebrachte Heizschlangen mittels 6 bar Sattdampf ebenfalls zur Verhinderung von Kondensation beheizt wird. Alle Apparateoberflächen im Bereich der Mühle, des Abscheidefilters, sowie der Versorgungsleitungen für Dampf und heißer Druckluft sind besonders isoliert.

Nach Erreichen der Aufheiztemperatur wird die Versorgung der Heizdüsen mit heißer Druckluft abgeschaltet und die Beaufschlagung der drei Mahldüsen mit überhitztem Wasserdampf (37,9 bar(abs), 325°C), als Mahlmedium, gestartet.

Zum Schutz des im Abscheidefilter eingesetzten Filtermittels sowie zur Einstellung eines bestimmten Restwassergehaltes des Mahlgutes (siehe Tabelle 1), wird Wasser in der Startphase und während der Vermahlung in den Mahlraum der Mühle über eine mit Druckluft betriebene Zweistoffdüse in Abhängigkeit von der Mühlenaustrittstemperatur eingedüst.

Folgende Konfiguration und Betriebsparameter der Mühle werden verwendet: Düsendurchmesser der Mahldüsen = 2,5 mm, Düsentyp = Laval, Anzahl der Düsen = 3 Stück; Mühleninnendruck = 1,306 bar (abs.), Eintrittsdruck des Mahlmediums = 37,9 bar (abs.), Eintrittstemperatur des Mahlmediums = 325 °C, Mühlen-austrittstemperatur des Mahlmediums = 149,8°C, Sichterdrehzahl = 3500 min-1, Sichterstrom = 54,5 A%, Austrittsstutzendurchmesser (Tauchrohrdurchmesser) = 100 mm.

Mit der Produktaufgabe wird begonnen, wenn die o. g. Prozessparameter konstant sind. Die Regelung der Aufgabemenge erfolgt in Abhängigkeit vom sich einstellenden Sichterstrom. Der Sichterstrom regelt die Aufgabemenge derart, dass ca. 70% des Nennstromes nicht überschritten werden können.

Als Eintragsorgan (4) fungiert dabei ein drehzahlgeregeltes Zellenrad, welches das Aufgabegut aus einem Vorlagebehälter über eine als barometrischer Abschluss dienende Taktschleuse in die unter Überdruck stehende Mahlkammer dosiert.

Die Zerkleinerung des Grobgutes erfolgt in den expandierenden Dampfstrahlen (Mahlgas). Gemeinsam mit dem entspannten Mahlgas steigen die Produktpartikel im Zentrum des Mühlenbehälters zum Sichtrad auf. Je nach eingestellter Sichterdrehzahl und Mahldampfmenge gelangen die Partikel, die eine ausreichende Feinheit aufweisen mit dem Mahldampf in den Feingutaustritt und von dort in das nachgeschaltete Abscheidesystem, während zu grobe Partikel zurück in die Mahlzone gelangen und einer nochmaligen Zerkleinerung unterworfen werden. Der Austrag des abgeschiedenen Feingutes aus dem Abscheidefilter in die nachfolgende Silierung und Abpackung geschieht mittels Zellenradschleuse.

Der an den Mahldüsen herrschende Mahldruck des Mahlgases, bzw. die daraus resultierenden Mahlgasmenge in Verbindung mit der Drehzahl des dynamischen Schaufelradsichters bestimmen die Feinheit der Kornverteilungsfunktion sowie die Oberkorngrenze.

Das Material wird auf die in Tabelle 1 durch den d90-Wert und den Anteil an Partikeln < 1 $\mu$m definierte Partikelgröße vermahlen.

Anschließend wird das Material im Wirbelbettreaktor (Wirbelbetthöhe des expandierten Wirbelbettes ca. 1,5 m, Wirbelbettdurchmesser ca. 0,5 m) behandelt. Dazu sind die folgenden Bedingungen einzuhalten:

> Zunächst werden 5 kg des vermahlenen Pulver in den Wirbelbettreaktor mit Fluidisierungsboden gefüllt. Der Fluidisierungsboden wird von einem Gasgemisch aus trockenem Stickstoff und trockener Luft durchströmt. Diese beiden Gase werden vor dem Eintritt in den Reaktor so dosiert, dass ein resultierender Sauerstoffgehalt von 6 Vol.-% nicht überschritten wird und dass sich eine Fluidisierungsgeschwindigkeit im Reaktor von 0,05 m/s ergibt. Der Reaktor wird nun von Raumtemperatur auf 600 °C erhitzt. Die Gasflüsse des Fluidisierungsgases sind in der Aufheizphase so zu regeln, dass die Fluidisierungsgeschwindigkeit im Reaktor von 0,05 m/s konstant bleibt.

Nach dem Erreichen von 600 °C wird für die Dauer von 3 h ein vorgeheiztes Gasgemisch von Wasserdampf und Stickstoff in den Reaktor eingespeist. Das Mischen der beiden Komponenten erfolgt derart, das sich eine Wasserdampfkonzentration von 90 % und ein Stickstoffgehalt von 10 % einstellt. Die Gasmengen werden so angepasst, dass wieder eine Fluidgasgeschwindigkeit von 0,05 m/s entsteht.

Danach wird die Dampfzugabe unterbrochen und 30 Minuten lang reiner Stickstoff bei 600 °C durch den Wirbelbettreaktor geleitet.

Dann wird das Material im trockenen Stickstoffstrom auf Raumtemperatur abgekühlt und aus dem Reaktor ausgetragen. In der Abkühlphase ist besonders darauf zu achten, dass jetzt kein Wasserdampf mehr anwesend ist.

Nun wird das Material mit gasförmiger HCl auf pH = 4,3 angesäuert.

Dazu wird das Material in Anteil A und Anteil B aufgeteilt

Anteil A wird mit gasförmiger HCl angesäuert. Dazu werden 20 g Kieselsäure für 2 Minuten (Durchfluss ca. 250 ml/h) bei Raumtemperatur begast. Dann wird das Material bei 10 Minuten mit Stickstoff gespült.

Nach dieser Behandlung weist das Material einen pH-Wert von 3,7 auf.

Zu dem angesäuerten Anteil A wird nun soviel Material von Anteil B zugegeben, bis sich ein pH-Wert von 4,3 ergibt.

Der Vorgang des Ansäuerns und Mischens kann solange wiederholt werden, bis man die gewünschte Probenmenge erreicht hat.

Die chemisch-physikalischen Daten des Beispiels 1 sind in Tabelle 1 aufgelistet.

**Vergleichsbeispiel**

Als Vergleichsbeispiel wurde die Fällungskieselsäure nach Beispiel 2 der DE 102006024591 verwendet.

Tabelle 1:

| **Produkt** | | **Beispiel 1** | **Vergleichsbeispiel** |
|---|---|---|---|
| BET | $m^2/g$ | 142 | 142 |
| CTAB | $m^2/g$ | 163 | 157 |
| DBP | g/100g | 286 | 295 |
| pH-Wert | - | 4,3 | 6,0 |
| Trocknungsverlust | % | 0,8 | 0,5 |
| Glühverlust | % | 0,9 | 0,9 |
| Extinktionsverhältnis $SiOH_{isoliert}$ | | 3,19 | 3,17 |
| Silanolgruppendichte | $SiOH/nm^2$ | 1,92 | 1,988 |
| Modifizierte Stampfdichte | g/l | 23 | 21 |
| Anteil feiner Partikel < 1 µm 1) | % | 74,79 | 66,7 |
| Art der Partikelverteilung | | Bimodal | Bimodal |
| $D_{90}$-Wert der volumenbezogenen Partikelverteilung | µm | 5, 03 | 5,87 |
| Verhalten gegenüber Wasser | | Hydrophil | Hydrophil |
| 1) bei 5 min Ultraschall mit 300 Watt | | | |

**Beispiel 3: Anwendungstechnische Prüfungen**

**3.1 Herstellung von acetatvernetzenden RTV-1K-Silicondichtungsmassen mit Fällungskieselsäuren**

Die für die Herstellung der nachfolgenden Formulierung benötigten Mengen sind in Tabelle 2 angegeben. Während der Herstellung ist mittels Leitungswasser so zu kühlen, das sich die Formulierung nicht wesentlich über Raumtemperatur erwärmt. Die Herstellung erfolgt bei Raumtemperatur und bei einer relativen Luftfeuchte von 40 bis 60 %.

In einen Planeten-Dissolver (Fa. H. Linden, Typ LPMD 2SP) ausgestattet mit einem 2 1-Rührgefäß mit Doppelmantel, Kühlwasseranschluß und unabhängig voneinander steuerbarem Planeten- und Dissolverantrieb, werden Siliconpolymer, Weichmacher (Siliconöl) und Vernetzer eingewogen und 1 min bei einer Geschwindigkeit von 50 $min^{-1}$ (Planetenantrieb) und 500 $min^{-1}$ (Dissolverantrieb) homogenisiert. Anschließend wird der Katalysator zugegeben und 15 min unter $N_2$-Atmosphäre bei gleichbleibenden Geschwindigkeiten des Planeten- und Dissolverantriebs homogenisiert. Danach werden im Vergleichsbeispiel der Stabilisator und die Fällungskieselsäure, im erfindungsgemäßen Beispiel nur die Fällungskieselsäure, ebenfalls bei gleichbleibenden Geschwindigkeiten eingearbeitet. Sobald die Fällungskieselsäure vollständig benetzt ist, wird ein Vakuum von ca. 200 mbar angelegt und 10 min bei 100 $min^{-1}$ des Planetenrührwerks und 2000 $min^{-1}$ des Dissolvers dispergiert.

Sofort nach Beendigung der Dispergierung wird das Rührgefäß mit Stickstoff belüftet. Mit einer Faßpresse wird die Dichtungsmasse möglichst schnell in Aluminiumtuben (Kartuschen) abgefüllt.

Tabelle 2: Formulierung zur Herstellung einer Einkomponenten Raumtemperatur-vernetzenden (RTV-1K) Silicondichtungsmasse (acetoxy-System)

| Formulierungsbestandteil [Allgemeiner Name] | Chemische Bezeichnung | Produktname und Hersteller | Vernetzer 42 g Füllgrad 12 % $SiO_2$ | | Vernetzer 30 g Füllgrad 12 % $SiO_2$ | |
|---|---|---|---|---|---|---|
| | | | Ein-waage [g] | Anteil [%] | Ein-waage | Anteil |
| **Siliconpolymer** OH-terminiertes Siliconpolymer (Viskosität = 50.000 mPa*s) | α,ω-Hydroxydimethylsiloxy-polydimethylsiloxan | **Silopren® E 50** GE Bayer Silicones GmbH & Co. KG | 468,00 | 58,6 | 468,00 | 60,1 |
| **Weichmacher** nicht-funktionelles Polydimethylsiloxan (Siliconöl, Viskosität = 1.000 mPa*s) | α,ω-Trimethylsiloxy-polydimethylsiloxan | **Oil M 1000** GE Bayer Silicones GmbH & Co. KG | 184,50 | 23,1 | 184,50 | 23,7 |
| **Aktiver Füllstoff** Fällungskieselsäure | Fällungskieselsäure | **Beispiel 1** | | | 95,79 | 12,3 |
| | | **Vergleichsbeispiel** | 95,79 | 11,99 | | |
| **Vernetzer** | Ethyltriacetoxysilan | **Ethyltriacetoxysilan** ABCR GmbH & Co.KG | 42,00 | 5,3 | 30,00 | 3,9 |
| **Stabilisator** | | **TP 3556** GE Bayer Silicones GmbH & Co. KG, | 8,00 | 1,0 | 0,00 | 0,00 |
| **Katalysator** | Dibutylzinndiacetat | **TEGOKAT® 233** Goldschmidt TIB GmbH | 7 Tr. 0,01 g | 0,001 | 7 Tr. 0,01 g | 0,001 |
| **Gesamtmengen** | | | **798,3** | **100** | **778,3** | **100** |

Tr. = Tropfen

### 3.2 Bestimmung der rheologischen Eigenschaften und der Lagerstabilität von RTV-1K-Dichtungsmassen

Die gemäß Beispiel 3, Punkt 1, "Herstellung von acetatvernetzenden RTV-1K-Silicondichtungsmassen mit Fällungskieselsäuren" hergestellten Dichtungsmassen werden vor der Prüfung mindestens 24 h im Klimaraum bei 23 °C / 50 % rel. Feuchte gelagert.

Zur Prüfung der Lagerstabilität der Dichtmassen werden zwei Tuben für 35 Tage im Klimaraum bei 23 °C / 50 % rel. Feuchte gelagert und jeweils nach 0, 7, 14, 21, 28 und 35 Tagen Lagerzeit geprüft. Zudem wird eine weitere Tube in einem Umluftofen bei 50 °C für 35 Tage gelagert und nach 1, 7, 14, 21, 28 und 35 Tagen Lagerzeit geprüft.

Die Bestimmung der rheologischen Eigenschaften erfolgt mittels eines Rheometers RheoStress 1 der Fa. Haake (Steuerung über PC durch das Programm RheoWin Pro). Die Bedienung des Geräts und der Software ist in der Betriebsanleitung von Fa. Haake ausführlich beschrieben. Für die Messung ist ein Stempel mit einem Durchmesser von 35 mm und der Messplattenaufsatz MPC 35 zu verwenden. Die Messung wird unter folgenden Bedingungen durchgeführt:

| | |
|---|---|
| Spaltabstand zwischen Stempel und Messplattenaufsatz: | 0,5 mm |
| Messtemperatur: | 23 °C |
| Messbereich (Scherrate): | 0 - 10 1/s |
| Anzahl der Messpunkte: | 400 |

Die Messpunkte werden in einem Diagramm dargestellt, das auf der x-Achse die Scherrate $\gamma$ und auf der y-Achse die Schubspannung $\tau$ darstellt. Bei der Scherrate = 10 1/s wird die Schubspannung abgelesen und daraus die Viskosität $\eta$ bei 10 1/s gemäß $\eta = \tau / \gamma$ errechnet. Gemessen werden zwei Tuben, je Tube werden mindestens drei Messungen durchgeführt. Aus den sechs Einzelergebnissen werden der höchste und niedrigste Wert gestrichen. Aus den verbleibenden vier Ergebnissen wird der Mittelwert berechnet.

Für die Ermittlung der Fließgrenze wird das Modell nach Casson verwendet. Als Datenbasis zur Berechnung der Fließkurve nach Casson wird der Bereich von 0,2 bis 2 1/s aus dem Scherrate-Schubspannung-Diagramm zugrunde gelegt. Folgende Abhängigkeit wird definiert:

$$\tau = f\left(\overset{\circ}{\gamma}\right)$$

Der Wert auf der y-Achse, bei dem diese die nach Casson errechneten Fließkurve schneidet, wird als Fließgrenze nach Casson angegeben.

Die Ermittlung sowohl der Viskosität bei 10 1/s als auch der Fließgrenze nach Casson erfolgt automatisch unter den o. a. Bedingungen mittels der Software RheoWin Pro.

### 3.3 Beurteilung der Ergebnisse

Zur Beurteilung der Standfestigkeit von Siliconkautschukformulierungen, in die die erfindungsgemäßen Fällungskieselsäuren eingearbeitet wurden, dienen die Messergebnisse für die Fließgrenze nach Casson und die Viskosität bei einer Scherrate von 1/10 (Tabelle 3).

Unter Standfestigkeit ist das rheologische Verhalten einer RTV-1K-Silicondichtmasse zu verstehen. Als gute Standfestigkeit wird bezeichnet, wenn Siliconkautschuk, auf eine senkrechte Fläche appliziert, dort über 24 h während der Aushärtung ohne Verlaufen haftet. Eine ausreichend gute Standfestigkeit kann man an einer Viskosität von ≥ 100 Pas und einer Fließgrenze von ≥ 90 Pa erkennen. Die Werte für die Fließgrenze nach Casson der Siliconkautschukformulierungen der Beispiele 3a und 3b liegen in einen vergleichbar guten Bereich und das obwohl die Silikonkautschukformulierung 3a eine um 30 % niedrigere Vernetzermenge sowie keinen Stabilisator enthält. Somit bleiben Formulierungen enthaltend die erfindungsgemäße Fällungskieselsäure in der Form bestehen, in der sie appliziert wurden und zeigen keine Neigung zum Verlaufen. Dies wird auch durch die Viskositätswerte bestätigt. Hier zeigen die erfindungsgemäßen Fällungskieselsäuren gegenüber den Vergleichsbeispielen eine deutlich verbesserte, d. h. höhere Viskosität.

Die Lagerstabilität, d. h. die Änderung der rheologischen Eigenschaften wie Fließgrenze und Viskosität sowie das negative Aushärtverhalten in der Tube über die Zeit, wird in den Tabellen 4 und 5 dargestellt. Dabei wurde sowohl die Lagerung bei Raumtemperatur als auch bei erhöhter Temperatur (50°C) betrachtet.

Tabelle 4 und 5 belegen die niedrige benötigte Vernetzermenge bei Verwendung der erfindungsgemäßen Fällungskieselsäure im Vergleich zur Fällungskieselsäure des Vergleichsbeispiels. Die Vernetzermenge konnte um etwa 30 % reduziert werden. Neben der niedrigen Vernetzermenge von nur 30 g auf 95,79 g Fällungskieselsäure konnte bei Verwendung der erfindungsgemäßen Fällungskieselsäure im Gegensatz zum Vergleichsbeispiel auch auf die Verwendung eines Stabilisators verzichtet werden. So zeigt Tabelle 3, dass die Viskosität der Formulierung mit der erfindungsgemäßen Fällungskieselsäure deutlich besser ist als die des Vergleichsbeispiels während die Fließgrenze in beiden Beispielen auf einem vergleichbaren, sehr guten Niveau ist.

Trotz der niedrigen Vernetzermenge und der Abwesenheit des Stabilisators zeigen die Formulierungen mit der erfindungsgemäßen sauren Fällungskieselsäure ein sehr gutes Lagerverhalten, was sich auch in der Konstanz von Viskosität und Fließgrenze der 35 Tage gelagerten Formulierung bei Raumtemperatur und 50 °C zeigt (Tabelle 4 und 5)

Trotz Abwesenheit eines Stabilisators härten die Proben des erfindungsgemäßen Beispiels selbst nach 35 Tagen Lagerzeit bei 50 °C ordnungsgemäß aus. Fällungskieselsäuren mit höheren pH-Werten wie im Vergleichsbeispiel gezeigt benötigen dagegen einen Stabilisator und höhere Vernetzermengen um auch nach längerer Lagerzeit bei erhöhter Temperatur ordnungsgemäß auszuhärten.

Tabelle 3: Standfestigkeitsprüfung

| **Beispiel** | **Eingesetzte Kieselsäure aus** | **Belad ung** [%] | **Gehalt an Vernetzer** [g] | **Stabilisator GE TP 3556** [g] | **Fließgrenze Casson** [Pa] | **Viskosität bei 10 1/s** [Pa*s] |
|---|---|---|---|---|---|---|
| 3a | Beispiel 1 | 12 | 30,0 | 0,0 | 241 | 159 |
| 3b | Vergleichsbeispiel | 12 | 42,0 | 8,0 | 260 | 118 |

Tabelle 4: Rheologie über 35 Tage bei RT

| Beispiel | Eingesetzte Kieselsäure aus | Beladung in [%] | Gehalt an Vernetzer in [g] | Stabilisator GE TP 3556 [g] | Temp. in [°C] | Dauer in [d] | Viskosität bei 10 1/s in [Pa*s] | Fließgrenze Casson in [Pa] |
|---|---|---|---|---|---|---|---|---|
| 3a | Beispiel 1 | 12 | 30 | 0,0 | 23 | 0 | 159 | 241 |
| | | | | | | 35 | 163 | 235 |
| 3b | Vergleichsbeispiel | 12 | 42 | 8,0 | 23 | 0 | 118 | 260 |
| | | | | | | 35 | 124 | 270 |

Tabelle 5: Rheologie uber 35 Tage bei 50 °C

| **Beispiel** | **Eingesetzte Kieselsäure aus** | **Beladung in [%]** | **Gehalt an Vernetzer in [g V]** | **Stabilisator GE TP 3556 [g]** | **Temp. in [°C]** | **Dauer in [d]** | **Viskosität bei 10 1/s in [Pa*s]** | **Fließgrenze Casson in [Pa]** |
|---|---|---|---|---|---|---|---|---|
| 3a | Beispiel 1 | 12 | 30 | 0,0 | 50 | 0 | 162 | 259 |
| | | | | | | 35 | 159 | 300 |
| 3b | Vergleichsbeispiel | 12 | 42 | 8,0 | 50 | 0 | 113 | 252 |
| | | | | | | 35 | 112 | 279 |

**Bezugszeichenliste für Abbildungen 1, 2, 2a, 3 und 3a**

| | |
|---|---|
| 1 | Strahlmühle |
| 2 | zylindrisches Gehäuse |
| 3 | Mahlkammer |
| 4 | Mahlgutaufgabe |
| 5 | Mahlstrahleinlass |
| 5a | Heizdüsen |
| 6 | Produktauslass |
| 7 | Windsichter |
| 8 | Sichtrad |
| 8a | Sichterspalt |
| 9 | Einlassöffnung oder Einlassdüse |
| 10 | Mahlstrahl |
| 11 | Heizquelle |
| 12 | Heizquelle |
| 13 | Zuführungsrohr |
| 14 | temperaturisolierender Mantel |
| 15 | Einlass |
| 16 | Auslass |
| 17 | Zentrum der Mahlkammer |
| 18 | Reservoir- oder Erzeugungseinrichtung |
| 19 | Leitungseinrichtungen |
| 20 | Austrittsstutzen (Tauchrohr) |
| 21 | Sichtergehäuse |
| 22 | Gehäuseoberteil |
| 23 | Gehäuseunterteil |
| 24 | Umfangsflansch |
| 25 | Umfangsflansch |
| 26 | Gelenk |
| 27 | Pfeil |
| 28 | Sichtraumgehäuse |
| 28a | Tragarme |
| 29 | Austragkonus |
| 30 | Flansch |
| 31 | Flansch |
| 32 | Deckscheibe |
| 33 | Deckscheibe |
| 34 | Schaufel |
| 35 | Sichtradwelle |
| 35a | Drehlager |
| 36 | obere bearbeitete Platten |
| 37 | untere bearbeitete Platte |
| 38 | Gehäuseendabschnitt |
| 39 | Produktaufgabestutzen |
| 40 | Drehachse |
| 41 | Austrittskammer |
| 42 | obere Deckplatte |
| 43 | abnehmbarer Deckel |
| 44 | Tragarme |
| 45 | kegelförmiges Ringgehäuse |
| 46 | Ansaugfilter |
| 47 | Lochplatte |
| 48 | Feingutaustragrohr |
| 49 | Abweiskegel |
| 50 | Sichtlufteintrittsspirale |

51 Grobgutaustrag
52 Flansch
53 Flansch
54 Dispersionszone
55 an der Innenkante bearbeitete (angefaste) Flansche und Auskleidung
56 auswechselbares Schutzrohr
57 auswechselbares Schutzrohr
58 Feingutaustritt/-auslass
59 Schaufelkranz

**Patentansprüche**

1. Fällungskieselsäure mit einem Extinktionsverhältnis $SiOH_{isoliert}$ von größer gleich 1,5, einer Silanolgruppendichte von 1 bis 3,0 $SiOH/nm^2$ und einer modifizierte Stampfdichte von 1 bis 50 g/l aufweist, **dadurch gekennzeichnet, dass** sie einen pH-Wert von 3 - 5 aufweist, ausgenommen Fällungskieselsäure mit einem pH-Wert von 4-5.

2. Fällungskieselsäure nach Anspruch 1, **dadurch gekennzeichnet, dass** sie folgende Eigenschaften

| | |
|---|---|
| BET-Oberfläche | 50 - 600 $m^2/g$ |
| CTAB-Oberfläche | 50 - 350 $m^2/g$ |
| DBP (wasserfrei) | 150 - 400 g/100g |

aufweist.

3. Fällungskieselsäure nach Anspruch 1 oder 2, **dadurch gekennzeichnet, dass** 30 bis 100 % der Partikel der volumenbezogenen Partikelverteilungskurve < 1 μm sind und/oder dass der d90 -Wert nicht größer als 0,001 - 10 μm ist.

4. Fällungskieselsäure nach einem der Ansprüche 1 bis 3,
**dadurch gekennzeichnet, dass** die Partikelverteilungskurve bimodal ist.

5. Fällungskieselsäure nach einem der Ansprüche 1 bis 4,
**dadurch gekennzeichnet, dass** der Glühverlust 0,1 - 3,0 Gew.-% beträgt und/oder dass der Trocknungsverlust 0,1 - 3,0 Gew.-% beträgt.

6. Fällungskieselsäure nach einem der Ansprüche 1 bis 5,
**dadurch gekennzeichnet, dass** es sich um eine hydrophile Fällungskieselsäure handelt.

7. Verfahren zur Herstellung einer Fällungskieselsäure gemäß einem der Ansprüche 1 bis 6, umfassend die folgenden Schritte:

   1. Umsetzung von zumindest einem Silikat mit zumindest einem Säuerungsmittel
   2. Filtration und Waschen der erhaltenen Fällungskieselsäure
   3. Trocknung der erhaltenen Fällungskieselsäure bzw. des Filterkuchens
   4. Optional Vermahlung der nach Schritt 3 erhaltenen Fällungskieselsäure
   5. Temperung der getrockneten und/oder vermahlenen Fällungskieselsäure
   6. Optional Vermahlung der nach Schritt 5 erhaltenen Fällungskieselsäure,

   **dadurch gekennzeichnet, dass** nach Schritt 3 und/oder 4 und/oder Schritt 5 und/oder Schritt 6 zumindest ein Säuerungsmittel derart zugegeben wird, dass die am Ende des Verfahrens erhaltene Fällungskieselsäure einen pH-Wert von 3 - 5, ausgenommen Fällungskieselsäure mit einem pH-Wert von 4 - 5, aufweist.

8. Verfahren nach Anspruch 7 **dadurch gekennzeichnet, dass** Schritt 1 die folgenden Teilschritte umfasst,

1a Herstellung einer Vorlage aus Wasser bzw. Wasser und zumindest einem Silikat und/oder einer Silikatlösung, wobei der pH-Wert der so erhaltenen Vorlage bevorzugt zwischen pH 5 und pH 10 und die Temperatur der Vorlage bevorzugt zwischen 80 und 100 °C liegt.

1b Dosierung zumindest eines Silikats und/oder einer Silikatlösung und zumindest eines Säuerungsmittels unter Rühren bei 80 bis 100 °C in die Vorlage aus Teilschritt 1a) so lange, bis ein Feststoffgehalt der Fällsuspension erreicht ist, der zu dem in Teilschritt 1c) zu erreichenden Feststoffgehalt führt.

1c Zugabe eines Säuerungsmittels bei einer Temperatur der Fällsuspension von 80 bis 100 °C, so das der pH-Wert der Fällsuspension auf 2 bis 6 erniedrigt wird und der Feststoffgehalt der Fällsuspension am Ende dieses Teilschritts zwischen 30 und 70 g/l liegt.

**9.** Verfahren nach Anspruch 7 oder 8, **dadurch gekennzeichnet, dass** der pH-Wert für die Dauer von Teilschritt 1b) konstant auf einem Wert zwischen pH 7 und pH 10 gehalten wird.

**10.** Verfahren nach einem der Ansprüche 7 bis 9, **dadurch gekennzeichnet, dass** die Mahlparameter so gewählt werden, dass das vermahlene Produkt im Bereich < 1 μm der volumenbezogenen Partikelverteilung einen Anteil an feinen Partikeln von 5 bis 100 % und/oder einen d90-Wert der volumenbezogene Partikelverteilungskurve zwischen 0,001 und 10 μm aufweist.

**11.** Verfahren nach Anspruch 10, **dadurch gekennzeichnet, dass** zur Vermahlung eine Strahlmühle, bevorzugt eine Fließbettgegenstrahlmühle verwendet wird.

**12.** Verfahren nach Anspruch 11, **dadurch gekennzeichnet, dass** die Fließbettgegenstrahlmühle mit Wasserdampf als Betriebsmittel betrieben wird.

**13.** Verfahren nach einem der Ansprüche 10 bis 12, **dadurch gekennzeichnet, dass** die Vermahlung mittels eines Mahlsystems (Mahlapparatur), bevorzugt eines Mahlsystems umfassend eine Strahlmühle durchgeführt wird und dass die Mühle in der Mahlphase mit einem Betriebsmittel, ausgewählt aus der Gruppe, die aus Gas und/oder Dampf, bevorzugt Wasserdampf, und/oder einem Gas enthaltend Wasserdampf, besteht, betrieben wird und dass der Mahlraum in einer Aufheizphase, d. h. vor dem eigentlichen Betrieb mit dem Betriebsmittel, derart aufgeheizt wird, dass die Temperatur im Mahlraum und/oder am Mühlenausgang, höher liegt als der Taupunkt des Dampfes und/oder Betriebsmittel.

**14.** Verfahren nach einem der Ansprüche 7 bis 13, **dadurch gekennzeichnet, dass** die Temperung der erfindungsgemäßen Fällungskieselsäure in Schritt 5 in einem Wirbelbett-, Fließbett-, oder Drehrohrreaktor durchgeführt wird.

**15.** Verfahren nach Anspruch 14, **dadurch gekennzeichnet, dass** ein Wirbelbettreaktor verwendet wird und das die folgenden Teilschritte

5a Einfüllen der Fällungskieselsäure in den Wirbelbettreaktor,

5b Vorheizen des Reaktors auf 300 bis 800 °C, wobei gleichzeitig der Reaktor von einem Inertgas und/oder Stickstoff-Luft-Gemisch so durchströmt wird, das ich eine Fluidierungsgeschwindigkeit von 0,02 bis 0,06 m/s einstellt,

5c Einspeisung eines Gasgemisches I aus Wasserdampf und einem Inertgas, oder eines Gasgemisches II aus Wasserdampf, einem Inertgas und Luft bei 300 bis 800°C für die Dauer von 0,25 bis 6 h, wobei das Gasgemisch den Reaktor mit einer Fluidisierungsgeschwindigkeit von 0,02 bis 0,06 m/s durchströmt und die Gasgemische I und II eine Wasserdampfkonzentration von 10 bis 95 Vol.-% und im Falle des Gasgemisches II einen Sauerstoffgehalt von 0,01 bis 21 Vol.-% aufweisen,

5d Unterbrechung der Dampfzugabe und Austreiben des Dampfes durch ein Inertgas, z. B. Stickstoff, und/oder ein Inertgas-Luft-Gemisch bei 300 bis 800 °C, wobei das Gas bzw. Gasgemisch den Reaktor mit einer Fluidisierungsgeschwindigkeit von 0,02 bis 0,06 m/s durchströmt und im Falle der Verwendung des Inertgas-Luft-Gemisches dieses einen Sauerstoffgehalt von 0,01 bis 21 Vol.-% aufweist.

(fortgesetzt)

5e Abkühlung der getemperten Fällungskieselsäure auf Raumtemperatur in einer trockenen Prozeßatmosphäre, wobei bei Verwendung eines Inertgas-Luft-Gemisches dieses einen Sauerstoffgehalt von 0,01 bis 21 Vol.-% aufweist durchgeführt werden.

**16.** Verfahren nach einem der Ansprüche 7 bis 15, **dadurch gekennzeichnet, dass** die nach Schritt 5 und/oder 6 erhaltene Fällungskieselsäure mit einem gasförmigen Säurungsmittel, bevorzugt HCl, und/oder HBr und/oder Stickoxiden und/oder verdampftem $SO_3$ und/oder verdampftem $SOCl_2$ auf einen pH-Wert von 3 - 5, ausgenommen ein pH-Wert von 4 - 5, angesäuert wird.

**17.** Verfahren nach Anspruch 16, **dadurch gekennzeichnet, dass** die nach Schritt 5 und/oder 6 erhaltene Fällungskieselsäure mit einem gasförmigen Säurungsmittel, bevorzugt HCl, und/oder HBr und/oder Stickoxiden und/oder verdampftem $SO_3$ und/oder verdampftem $SOCl_2$ auf einen pH-Wert von 3 - 5, ausgenommen ein pH-Wert von 4 - 5, angesäuert und danach mit einem Inertgas, bevorzugt Stickstoff und / oder trockener Luft gespült wird.

**18.** Verfahren nach einem der Ansprüche 7 bis 15, **dadurch gekennzeichnet, dass** die nach Schritt 5 und/oder 6 erhaltene Fällungskieselsäure in eine Fraktion A und eine Fraktion B aufgeteilt, die Fraktion A mit einem gasförmigen Säurungsmittel, bevorzugt HCl und / oder HBr und/oder Stickoxiden und/oder verdampftem $SO_3$ und/oder verdampftem $SOCl_2$, auf einen pH-Wert von 2 bis 4,5 angesäuert und danach die angesäuerte Fraktion A mit Fraktion B derart gemischt wird, dass die so erhaltene Fällungskieselsäure am Ende des Verfahrens einen pH-Wert von 3 - 5, ausgenommen ein pH-Wert von 4 - 5, aufweist.

**19.** Verfahren nach Anspruch 18, **dadurch gekennzeichnet, dass** die nach Schritt 5 und/oder 6 erhaltene Fällungskieselsäure in eine Fraktion A und eine Fraktion B aufgeteilt, die Fraktion A mit einem gasförmigen Säurungsmittel, bevorzugt HCl und / oder HBr und/oder Stickoxiden und/oder verdampftem $SO_3$ und/oder verdampftem $SOCl_2$, auf einen pH-Wert von 2 bis 4,5 angesäuert, mit einem Inertgas, bevorzugt Stickstoff und / oder trockener Luft gespült wird und danach die angesäuerte Fraktion A mit Fraktion B derart gemischt wird, dass die so erhaltene Fällungskieselsäure am Ende des Verfahrens einen pH-Wert von 3 - 5, ausgenommen ein pH-Wert von 4 - 5, aufweist.

**20.** Verwendung von Fällungskieselsäuren gemäß einem der Ansprüche 1 bis 6 zur Herstellung von Dichtungsmassen.

**21.** Verwendung nach Anspruch 20, **dadurch gekennzeichnet, dass** es sich bei der Dichtungsmasse um RTV-1K-Siliconkautschuk bzw. um Silicondichtungsmassen der verschiedenen Vernetzungssysteme (acetoxy-vernetzend, alcoxy-vernetzend und/oder oxim-vernetzend) handelt.

**22.** Dichtungsmasse enthaltend zumindest eine Fällungskieselsäure gemäß einem der Ansprüche 1 bis 6

**23.** Dichtungsmasse nach Anspruch 22, **dadurch gekennzeichnet, dass** es sich bei der Dichtungsmasse um RTV-1K-Siliconkautschuk bzw. um Silicondichtungsmassen der verschiedenen Vernetzungssysteme (acetoxy-vernetzend, alcoxy-vernetzend und/oder oxim-vernetzend) handelt.

**24.** Verwendung der Dichtungsmasse gemäß Anspruch 22 oder 23 in der Bauindustrie als Fugendichtungsmassen, in der Automobilindustrie als Kleb- und Dichtstoff und/oder als Beschichtungsmassen für Textilgewebe.

## Claims

**1.** Precipitated silica having an $SiOH_{isolated}$ absorbance ratio of greater than or equal to 1.5, a silanol group density of 1 to 3.0 SiOH/nm$^2$, and a modified tapped density of 1 to 50 g/l, **characterized in that** it has a pH of 3 - 5, with the exception of precipitated silica having a pH of 4 - 5.

**2.** Precipitated silica according to Claim 1, **characterized in that** it has the following properties:

| | |
|---|---|
| BET surface area | 50 - 600 m$^2$/g |
| CTAB surface area | 50 - 350 m$^2$/g |

DBP (anhydrous) 150 - 400 g/100 g

**3.** Precipitated silica according to Claim 1 or 2, **characterized in that** 30% to 100% of the particles in the volume-based particle distribution curve are < 1 μm and/or **in that** the d90 value is not greater than 0.001 - 10 μm.

**4.** Precipitated silica according to any one of Claims 1 to 3, **characterized in that** the particle distribution curve is bimodal.

**5.** Precipitated silica according to any one of Claims 1 to 4, **characterized in that** the loss on ignition is 0.1% - 3.0% by weight and/or **in that** the loss on drying is 0.1% - 3.0% by weight.

**6.** Precipitated silica according to any one of Claims 1 to 5, **characterized in that** it is a hydrophilic precipitated silica.

**7.** Process for preparing a precipitated silica according to any one of Claims 1 to 6, comprising the following steps:

1. reacting at least one silicate with at least one acidifier
2. filtering and washing the resulting precipitated silica
3. drying the resulting precipitated silica or filtercake
4. optionally grinding the precipitated silica obtained after step 3
5. heat-treating the dried and/or ground precipitated silica
6. optionally grinding the precipitated silica obtained after step 5,

**characterized in that** after step 3 and/or 4 and/or step 5 and/or step 6 at least one acidifier is added such that the precipitated silica obtained at the end of the process has a pH of 3 - 5, with the exception of precipitated silica having a pH of 4 - 5.

**8.** Process according to Claim 7, **characterized in that** step 1 comprises the following substeps:

1a preparing an initial charge of water or of water and at least one silicate and/or a silicate solution, the pH of the resulting initial charge being preferably between 5 and 10 and the temperature of the initial charge being preferably between 80 and 100°C.

1b metering at least one silicate and/or a silicate solution and at least one acidifier into the initial charge from substep 1a) with stirring at 80 to 100°C until the solids content of the precipitation suspension reaches a level which leads to the solids content which is to be reached in substep 1c).

1c adding an acidifier at a temperature of the precipitation suspension of 80 to 100°C, so that the pH of the precipitation suspension is lowered to 2 to 6 and the solids content of the precipitation suspension at the end of this substep is between 30 and 70 g/l.

**9.** Process according to Claim 7 or 8, **characterized in that** for the period of substep 1b) the pH is held constant at a level between 7 and 10.

**10.** Process according to any one of Claims 7 to 9, **characterized in that** the grinding parameters are selected such that the ground product in the range < 1 μm of the volume-based particle distribution has a fine-particle fraction of 5% to 100% and/or a d90 value of the volume-based particle distribution curve of between 0.001 and 10 μm.

**11.** Process according to Claim 10, **characterized in that** grinding takes place using a jet mill, preferably a fluid-bed opposed-jet mill.

**12.** Process according to Claim 11, **characterized in that** the fluid-bed opposed-jet mill is operated with steam as operational medium.

**13.** Process according to any one of Claims 10 to 12, **characterized in that** the grinding is carried out by means of a grinding system (grinding apparatus), preferably a grinding system comprising a jet mill, and **in that** in the grinding phase the mill is operated with an operational medium selected from the group consisting of gas and/or vapor, preferably steam, and/or a gas comprising steam, and **in that** in a heating phase, i.e. before the actual operation

with the operational medium, the grinding chamber is heated such that the temperature in the grinding chamber and/or at the mill outlet is higher than the dew point of the vapor and/or operational medium.

**14.** Process according to any one of Claims 7 to 13, **characterized in that** the heat treatment of the precipitated silica of the invention in step 5 is carried out in a fluidized-bed, fluid-bed or rotary-tube reactor.

**15.** Process according to Claim 14, **characterized in that** a fluidized-bed reactor is used and **in that** the following substeps are carried out:

5a introducing the precipitated silica into the fluidized-bed reactor,

5b preheating the reactor to 300 to 800°C, the reactor being traversed at the same time by a flow of inert gas and/or nitrogen/air mixture in such a way as to produce a fluidization velocity of 0.02 to 0.06 m/s,

5c feeding in a gas mixture I comprising steam and an inert gas, or a gas mixture II comprising steam, an inert gas and air, at 300 to 800°C for a period of 0.25 to 6 h, the gas mixture traversing the reactor with a fluidization velocity of 0.02 to 0.06 m/s, and the gas mixtures I and II having a steam concentration of 10 to 95% by volume and in the case of gas mixture II an oxygen content of 0.01% to 21% by volume,

5d interrupting the addition of vapor and expelling the vapor by means of an inert gas,
nitrogen for example, and/or of an inert gas/air mixture at 300 to 800°C, the gas or gas mixture traversing the reactor with a fluidization velocity of 0.02 to 0.06 m/s, and, if using an inert gas/air mixture, said mixture having an oxygen content of 0.01% to 21% by volume,

5e cooling the heat-treated precipitated silica to room temperature in a dry process atmosphere, where, if using an inert gas/air mixture, said mixture has an oxygen content of 0.01% to 21% by volume.

**16.** Process according to any one of Claims 7 to 15, **characterized in that** the precipitated silica obtained after step 5 and/or 6 is acidified using a gaseous acidifier, preferably HCl, and/or HBr and/or oxides of nitrogen and/or vaporized $SO_3$ and/or vaporized $SOCl_2$, to a pH of 3 - 5, with the exception of a pH of 4 - 5.

**17.** Process according to Claim 16, **characterized in that** the precipitated silica obtained after step 5 and/or 6 is acidified using a gaseous acidifier, preferably HCl, and/or HBr and/or oxides of nitrogen and/or vaporized $SO_3$ and/or vaporized $SOCl_2$, to a pH of 3 - 5, with the exception of a pH of 4 - 5, and thereafter is flushed with an inert gas, preferably nitrogen and/or dry air.

**18.** Process according to any one of Claims 7 to 15, **characterized in that** the precipitated silica obtained after step 5 and/or 6 is divided into a fraction A and fraction B, the fraction A is acidified using a gaseous acidifier, preferably HCl and/or HBr and/or oxides of nitrogen and/or vaporized $SO_3$ and/or vaporized $SOCl_2$, to a pH of 2 to 4.5, and thereafter the acidified fraction A is mixed with fraction B such that the precipitated silica thus obtained at the end of the process has a pH of 3 - 5, with the exception of a pH of 4 - 5.

**19.** Process according to Claim 18, **characterized in that** the precipitated silica obtained after step 5 and/or 6 is divided into a fraction A and fraction B, the fraction A is acidified using a gaseous acidifier, preferably HCl and/or HBr and/or oxides of nitrogen and/or vaporized $SO_3$ and/or vaporized $SOCl_2$, to a pH of 2 to 4.5, flushed with an inert gas, preferably nitrogen and/or dry air, and thereafter the acidified fraction A is mixed with fraction B such that the precipitated silica thus obtained at the end of the process has a pH of 3 - 5, with the exception of a pH of 4 - 5.

**20.** Use of precipitated silicas according to any one of Claims 1 to 6 for producing sealants.

**21.** Use according to Claim 20, **characterized in that** the sealant is RTV-1K silicone rubber or a silicone sealant of the various crosslinking systems (acetoxy-crosslinking, alkoxy-crosslinking and/or oxime-crosslinking).

**22.** Sealant comprising at least one precipitated silica according to any one of Claims 1 to 6.

**23.** Sealant according to Claim 22, **characterized in that** the sealant is RTV-1K silicone rubber or a silicone sealant of the various crosslinking systems (acetoxy-crosslinking, alkoxy-crosslinking and/or oxime-crosslinking).

**24.** Use of the sealant according to Claim 22 or 23, in the building industry as a joint-sealant, in the automotive industry as an adhesive and sealant and/or as a coating material for textile fabric.

**Revendications**

1. Silice précipitée présentant un rapport d'extinction $SiOH_{isolé}$ supérieur à 1,5, une densité de groupes silanol de 1 à 3,0 $SiOH/nm^2$ et une densité tassée modifiée de 1 à 50 g/l, **caractérisée en ce qu'**elle présente un pH de 3-5, à l'exception de la silice précipitée présentant un pH de 4-5.

2. Silice précipitée selon la revendication 1, **caractérisée en ce qu'**elle présente les propriétés suivantes :

| | |
|---|---|
| Surface BET | 50-600 $m^2/g$ |
| Surface CTAB | 50-350 $m^2/g$ |
| DBP (anhydre) | 150-400 g/100 g. |

3. Silice précipitée selon la revendication 1 ou 2, **caractérisée en ce que** 30 à 100% des particules de la courbe de répartition volumique des particules sont < 1 $\mu$m et/ou **en ce que** la valeur $d_{90}$ n'est pas supérieure à 0,001-10 $\mu$m.

4. Silice précipitée selon l'une quelconque des revendications 1 à 3, **caractérisée en ce que** la courbe de répartition des particules est bimodale.

5. Silice précipitée selon l'une quelconque des revendications 1 à 4, **caractérisée en ce que** la perte à la calcination est de 0,1-3,0% en poids et/ou **en ce que** la perte au séchage est de 0,1-3,0% en poids.

6. Silice précipitée selon l'une quelconque des revendications 1 à 5, **caractérisée en ce qu'**il s'agit d'une silice précipitée hydrophile.

7. Procédé pour la préparation d'une silice précipitée selon l'une quelconque des revendications 1 à 6, comprenant les étapes suivantes :

   1. transformation d'au moins un silicate avec au moins un agent d'acidification
   2. filtration et lavage de la silice précipitée obtenue
   3. séchage de la silice précipitée ou du gâteau de filtration obtenu(e)
   4. broyage éventuel de la silice précipitée obtenue selon l'étape 3
   5. traitement thermique de la silice précipitée séchée et/ou broyée
   6. broyage éventuel de la silice précipitée obtenue selon l'étape 5,

   **caractérisé en ce qu'**on ajoute, après l'étape 3 et/ou 4 et/ou l'étape 5 et/ou l'étape 6 au moins un agent d'acidification de manière telle que la silice précipitée obtenue à la fin du procédé présente un pH de 3-5, à l'exception de la silice précipitée présentant un pH de 4-5.

8. Procédé selon la revendication 7, **caractérisé en ce que** l'étape 1 comprend les étapes partielles suivantes

   1a préparation d'une charge préalable d'eau ou, selon le cas, d'eau et d'au moins un silicate et/ou une solution de silicate, le pH de la charge préalable ainsi obtenue se situant de préférence entre pH 5 et pH 10 et la température de la charge préalable se situant de préférence entre 80 et 100°C,

   1b dosage d'au moins un silicate et/ou d'au moins une solution de silicate et d'au moins un agent d'acidification sous agitation à 80 jusqu'à 100°C
   dans la charge préalable de l'étape partielle 1a) jusqu'à ce qu'on atteigne une teneur en solides de la suspension de précipitation qui conduit à la teneur en solides à atteindre dans l'étape partielle 1c),

   1c addition d'un agent d'acidification à une température de la suspension de précipitation de 80 à 100°C, de manière telle que le pH de la suspension de précipitation est abaissé de 2 à 6 et que la teneur en solides de la suspension de précipitation à la fin de cette étape partielle se situe entre 30 et 70 g/l.

9. Procédé selon la revendication 7 ou 8, **caractérisé en ce que** le pH est maintenu constant à une valeur entre pH 7 et pH 10 pendant la durée de l'étape partielle 1b).

**10.** Procédé selon l'une quelconque des revendications 7 à 9, **caractérisé en ce que** les paramètres de broyages sont choisis de manière telle que le produit broyé présente, dans la plage < 1 μm de la répartition volumique des particules, une proportion de fines particules de 5 à 100% et/ou une valeur $d_{90}$ de la courbe de répartition volumique des particules entre 0,001 et 10 μm.

**11.** Procédé selon la revendication 10, **caractérisé en ce qu'**on utilise, pour le broyage, un broyeur à jets, de préférence un broyeur à jets opposés à lit fluidisé.

**12.** Procédé selon la revendication 11, **caractérisé en ce que** le broyeur à jets opposés à lit fluidisé est exploité avec de la vapeur d'eau comme agent de fonctionnement.

**13.** Procédé selon l'une quelconque des revendications 10 à 12, **caractérisé en ce que** le broyage est réalisé au moyen d'un système de broyage (appareil de broyage), de préférence un système de broyage comprenant un broyeur à jets et **en ce que** le broyeur est exploité, dans la phase de broyage, avec un agent de fonctionnement choisi dans le groupe constitué par un gaz et/ou de la vapeur, de préférence de la vapeur d'eau et/ou un gaz contenant de la vapeur d'eau et **en ce que** l'espace de broyage est chauffé, pendant une phase de chauffage, c'est-à-dire avant l'exploitation en soi avec l'agent de fonctionnement, de manière telle que la température dans l'espace de broyage et/ou à la sortie du broyeur est supérieure au point de rosée de la vapeur et/ou de l'agent de fonctionnement.

**14.** Procédé selon l'une quelconque des revendications 7 à 13, **caractérisé en ce que** le traitement thermique de la silice précipitée selon l'invention dans l'étape 5 est réalisé dans un réacteur à lit tourbillonnent, à lit fluidisé ou un réacteur à tube rotatif.

**15.** Procédé selon la revendication 14, **caractérisé en ce qu'**on utilise un réacteur à lit tourbillonnant et qu'on réalise les étapes partielles suivantes

5a introduction de la silice précipitée dans le réacteur à lit tourbillonnant,

5b préchauffage du réacteur à 300 jusqu'à 800°C, le réacteur étant simultanément traversé par un flux de gaz inerte et/ou de mélange azote-air de manière à ce qu'une vitesse de fluidisation de 0,02 à 0,06 m/s se règle,

5c injection d'un mélange gazeux I de vapeur d'eau et d'un gaz inerte, ou d'un mélange gazeux II de vapeur d'eau, d'un gaz inerte et d'air à 300 jusqu'à 800 °C pendant une durée de 0,25 à 6 h, le mélange gazeux s'écoulant dans le réacteur à une vitesse de fluidisation de 0,02 à 0,06 m/s et les mélanges gazeux I et II présentant une
concentration en vapeur d'eau de 10 à 95% en volume et, dans le cas du mélange gazeux II, une teneur en oxygène de 0,01 à 21% en volume,

5d interruption de l'addition de vapeur et expulsion de la vapeur par un gaz inerte, par exemple de l'azote, et/ou par un mélange gaz inerte-air à 300 jusqu'à 800°C, le gaz ou, selon le cas, le mélange gazeux s'écoulant dans le réacteur à une vitesse de fluidisation de 0,02 à 0,06 m/s et, dans le cas de l'utilisation du mélange gaz inerte-air, celui-ci présentant une teneur en oxygène de 0,01 à 21% en volume,

5e refroidissement de la silice précipitée traitée thermiquement à température ambiante dans une atmosphère de procédé sèche, où, lors de l'utilisation d'un mélange gaz inerte-air, celui-ci présente une teneur en oxygène de 0,01 à 21% en volume.

**16.** Procédé selon l'une quelconque des revendications 7 à 15, **caractérisé en ce que** la silice précipitée obtenue selon l'étape 5 et/ou 6 est acidifiée par un agent d'acidification gazeux, de préférence HCl et/ou HBr et/ou des oxydes d'azote et/ou du $SO_3$ évaporé et/ou du $SOCl_2$ évaporé, à un pH de 3-5, à l'exception d'une valeur de pH de 4-5.

**17.** Procédé selon la revendication 16, **caractérisé en ce que** la silice précipitée obtenue après l'étape 5 et/ou 6 est acidifiée par un agent d'acidification gazeux, de préférence HCl et/ou HBr et/ou des oxydes d'azote et/ou du $SO_3$ évaporé et/ou du $SOCl_2$ évaporé, à un pH de 3-5, à l'exception d'une valeur de pH de 4-5 puis rincée à l'aide d'un gaz inerte, de préférence de l'azote et/ou de l'air sec.

**18.** Procédé selon l'une quelconque des revendications 7 à 15, **caractérisé en ce que** la silice précipitée obtenue selon l'étape 5 et/ou 6 est répartie en une fraction A et une fraction B, la fraction A est acidifiée par un agent d'acidification gazeux, de préférence HCl et/ou HBr et/ou des oxydes d'azote et/ou du $SO_3$ évaporé et/ou du $SOCl_2$ évaporé, à un pH de 2 à 4,5, puis la fraction A acidifiée est mélangée avec la fraction B de manière telle que la silice précipitée

ainsi obtenue présente, à la fin du procédé, un pH de 3-5, à l'exception d'une valeur de pH de 4-5.

**19.** Procédé selon la revendication 18, **caractérisé en ce que** la silice précipitée obtenue selon l'étape 5 et/ou 6 est répartie en une fraction A et une fraction B, la fraction A est acidifiée par un agent d'acidification gazeux, de préférence HCl et/ou HBr et/ou des oxydes d'azote et/ou du $SO_3$ évaporé et/ou du $SOCl_2$ évaporé, à un pH de 2 à 4,5, rincée à l'aide d'un gaz inerte, de préférence de l'azote et/ou de l'air sec, puis la fraction A acidifiée est mélangée avec la fraction B de manière telle que la silice précipitée ainsi obtenue présente, à la fin du procédé, un pH de 3-5, à l'exception d'une valeur de pH de 4-5.

**20.** Utilisation de silices précipitées selon l'une quelconque des revendications 1 à 6 pour la préparation de masses d'étanchéité.

**21.** Utilisation selon la revendication 20, **caractérisée en ce qu'**il s'agit, pour la masse d'étanchéité, d'un caoutchouc de silicone à 1 composant vulcanisant à température ambiante ou, selon le cas, de masses d'étanchéité de silicone présentant différents systèmes de réticulation (réticulation par fonction acétoxy, alcoxy et/ou oxime).

**22.** Masse d'étanchéité contenant au moins une silice précipitée selon l'une quelconque des revendications 1 à 6.

**23.** Masse d'étanchéité selon la revendication 22, **caractérisée en ce qu'**il s'agit, pour la masse d'étanchéité, d'un caoutchouc de silicone à 1 composant vulcanisant à température ambiante ou, selon le cas, de masses d'étanchéité de silicone présentant différents systèmes de réticulation (réticulation par fonction acétoxy, alcoxy et/ou oxime).

**24.** Utilisation de la masse d'étanchéité selon la revendication 22 ou 23 dans l'industrie de la construction comme masses d'étanchéité de joints, dans l'industrie automobile comme adhésif et masse d'étanchéité et/ou comme masses de revêtement pour les tissus textiles.

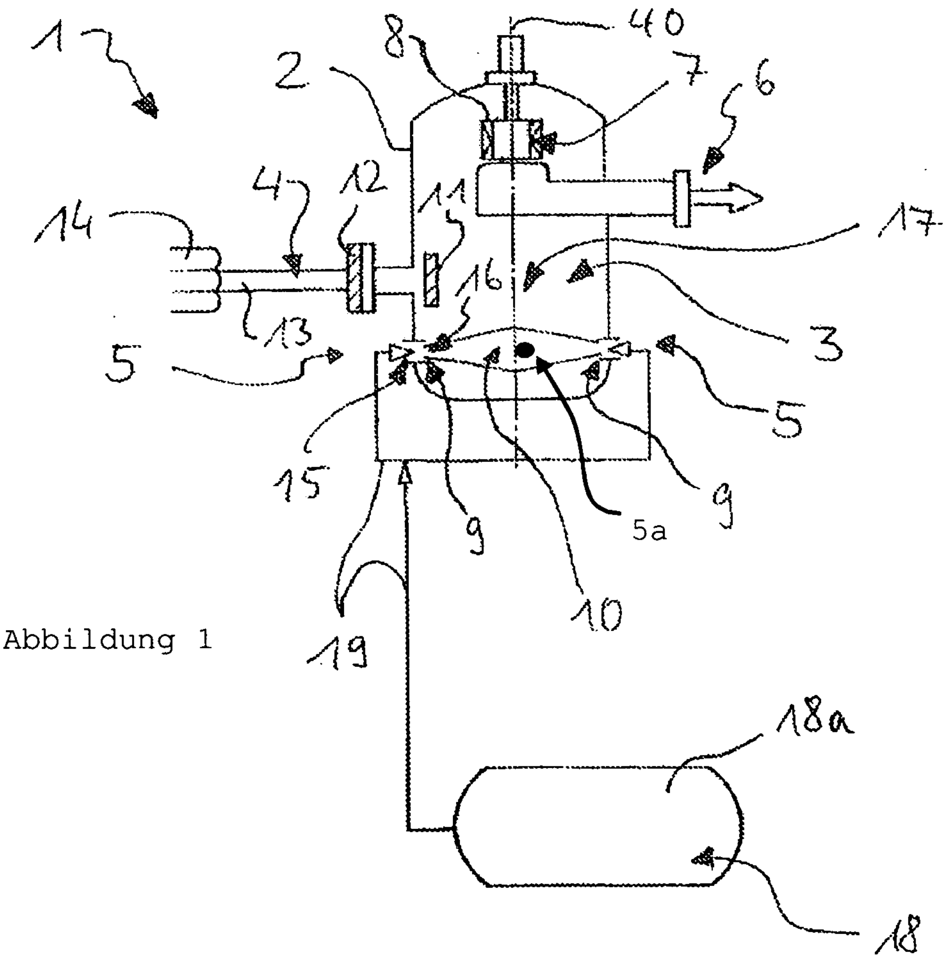


Abbildung 1

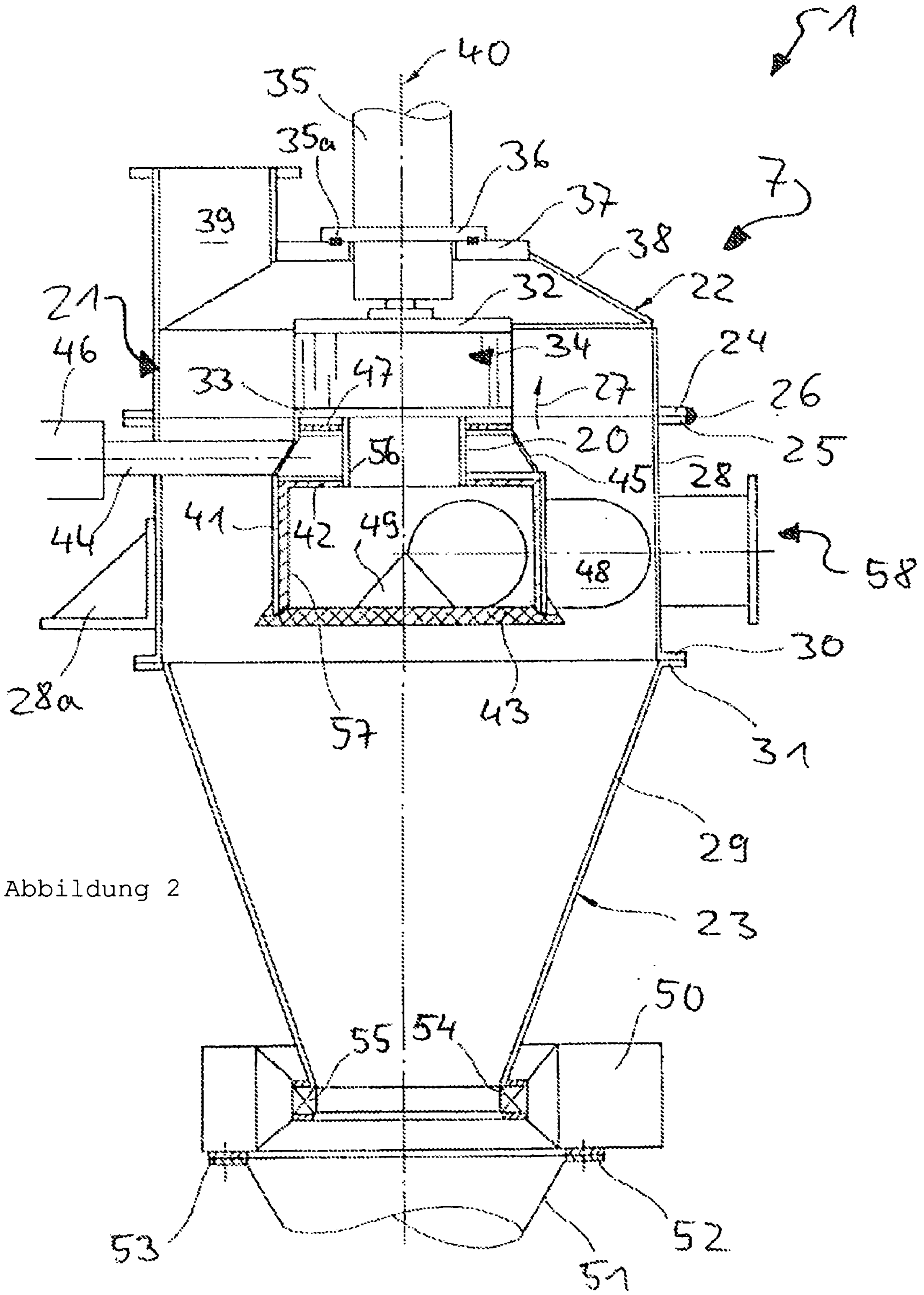
1
40
35
35a
36
37
7
38
39
22
32
21
46
34
24
33
47
27
26
20
56
25
45
28
41
42
49
44
58
48
30
28a
57
43
31
29
23
50
55
54
53
52
51

Abbildung 2

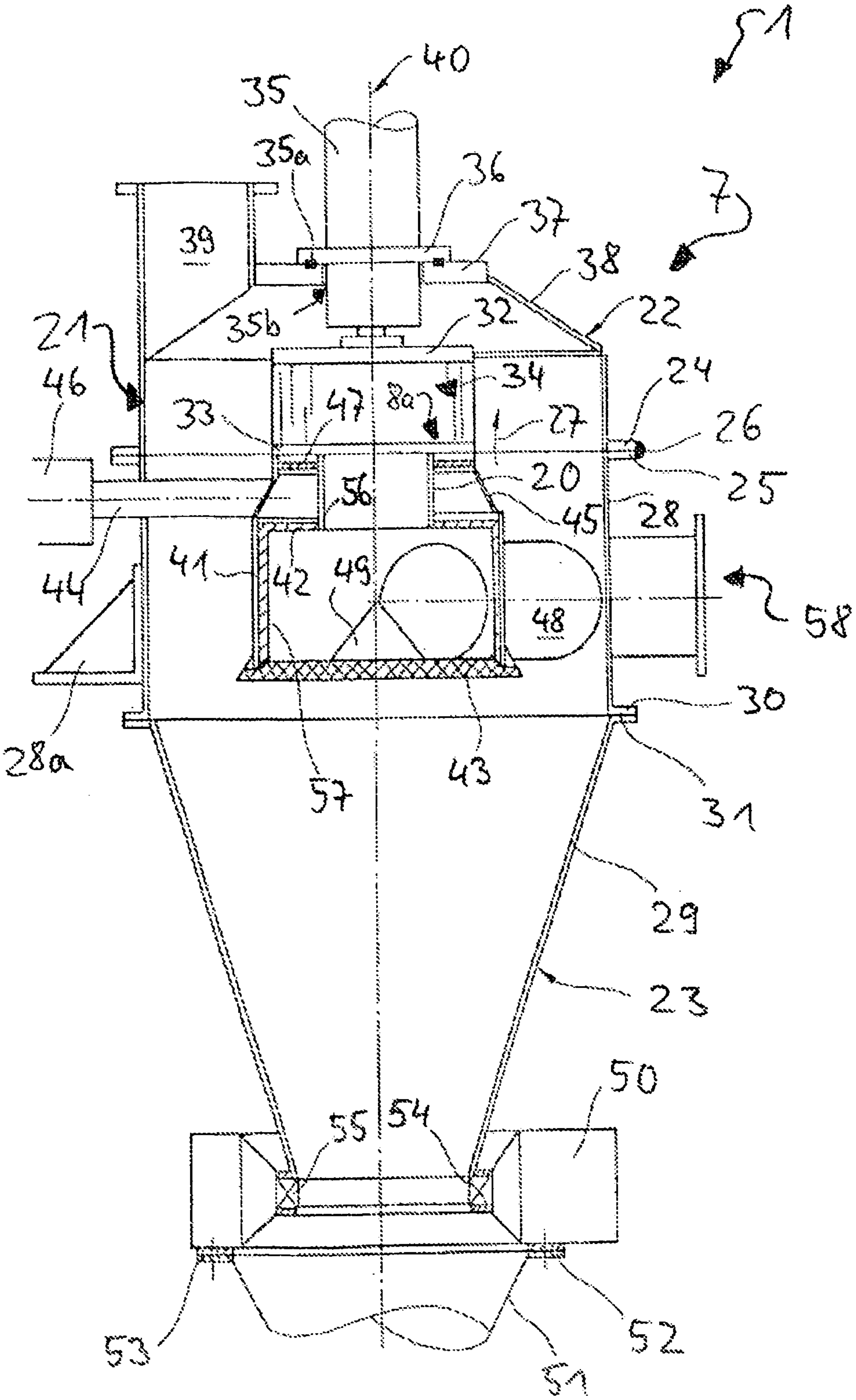


Abbildung 2a

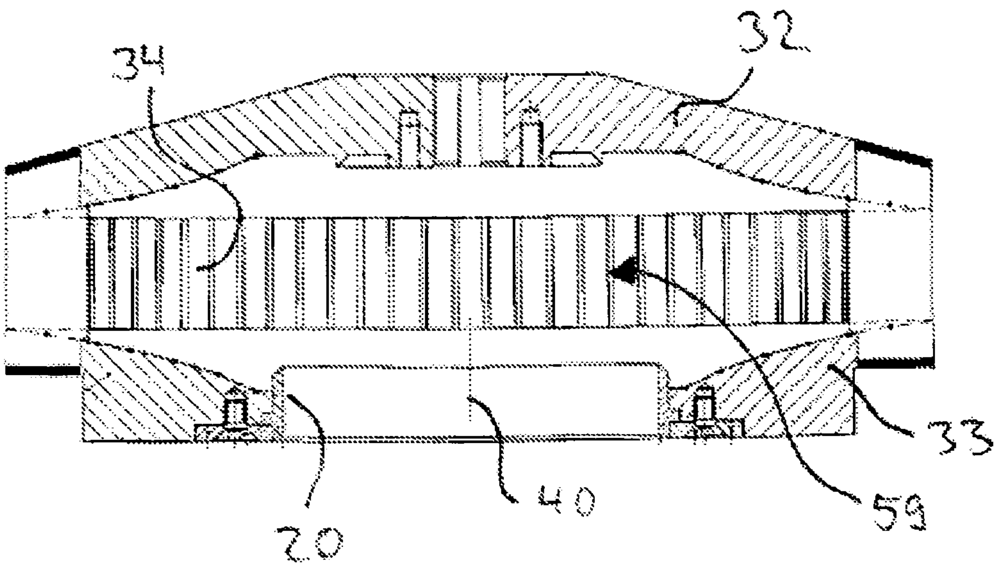


Abbildung 3

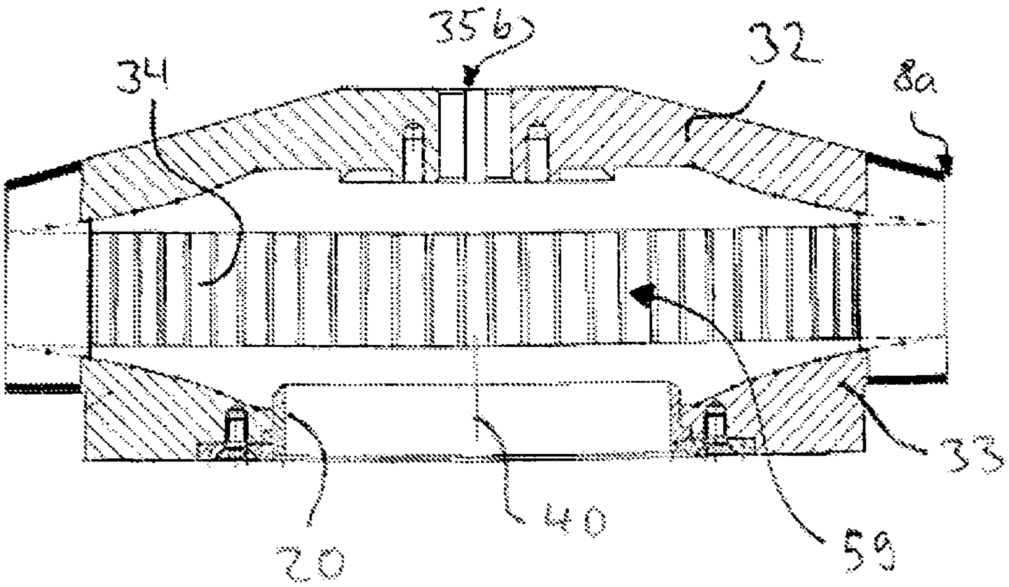


Abbildung 3a

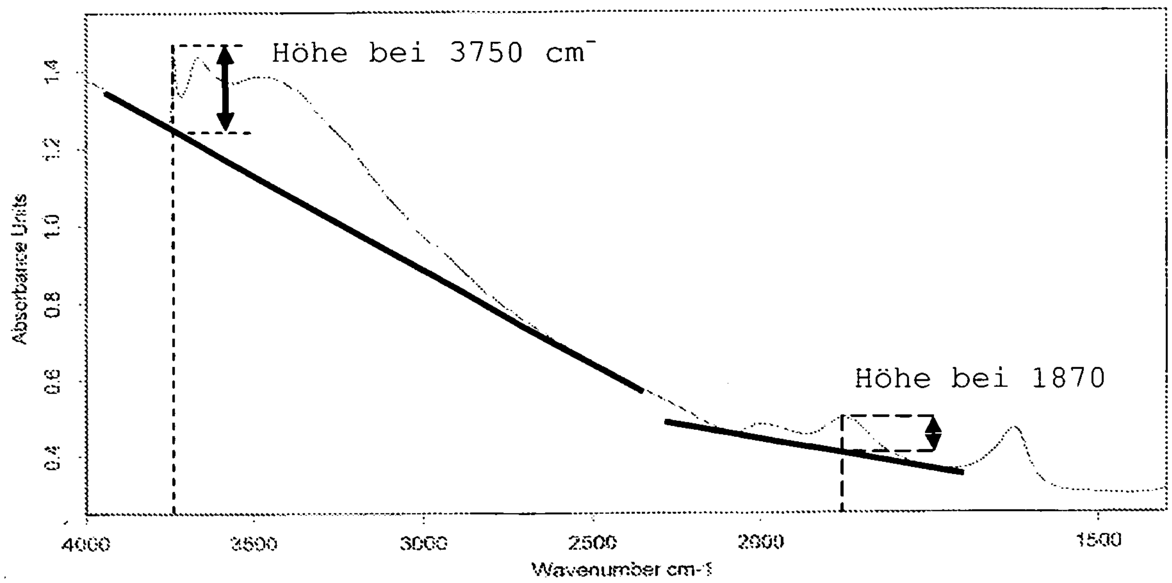


Abbildung 4: Schema zur Auswertung der IR-Spektren

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2005061384 A
- EP 1557446 A
- DE 102005005046
- EP 1561727 A
- DE 102006024591
- DE 102006024590
- EP 0643015 A
- DE 2447613
- US 4094771 A
- DE 102006048850
- EP 0472930 B1
- DE 19824062 A1


### In der Beschreibung aufgeführte Nicht-Patentliteratur


- **S. Brunauer ; P. H. Emmett ; E. Teller.** Adsorption of Gases in Multimolecular Layers. *J. Am. Chem. Soc.,* 1938, vol. 60, 309
- **Janzen ; Kraus.** *Rubber Chem. Technol.,* 1971, vol. 44, 1287
- **W.T. Yen ; R.S. Chahal ; T. Salman.** *Can. Met. Quart.,* 1973, vol. 12 (3